# EUROPÄISCHE PATENTSCHRIFT

(11) **EP 3 998 913 B1**
(45) Veröffentlichungstag und Bekanntmachung des Hinweises auf die Patenterteilung: **02.08.2023**
(21) Anmeldenummer: 20739324.0
(22) Anmeldetag: 08.07.2020
(51) Int. Cl.: A47J 31/36

(54) **BRÜHEINHEIT EINER KAFFEEMASCHINE**
BREWING UNIT FOR A COFFEE MACHINE
UNITÉ D'INFUSION POUR UNE MACHINE À CAFÉ

(30) Priorität: 15.07.2019 DE 102019119103
(43) Veröffentlichungstag der Anmeldung: 25.05.2022
(73) Patentinhaber: Melitta Professional Coffee Solutions GmbH & Co. KG, 32429 Minden (DE)
(72) Erfinder: HENSEL, Armin, 32369 Rahden (DE); MEYER, Dirk, 32457 Porta Westfalica (DE); BUCHHOLZ, Bernd, 32369 Rahden (DE)
(74) Vertreter: Specht, Peter
(86) Internationale Anmeldenummer: PCT/EP2020/069207
(87) Internationale Veröffentlichungsnummer: WO 2021/008957

(56) Entgegenhaltungen:
- EP-A1- 0 450 200
- EP-A1- 0 521 561
- WO-A1-2009/021395
- WO-A1-2014/077687
- CN-A- 107 307 744
- DE-A1-102013 214 578

## Beschreibung

Die Erfindung betrifft eine Brüheinheit einer Kolbenkaffeemaschine nach dem Oberbegriff des Anspruchs 1 sowie eine Kolbenkaffeemaschine mit einer solchen Brüheinheit.

Brüheinheiten von Kolbenkaffeemaschinen sind in vielen Ausführungen bekannt. Innerhalb der Brüheinheit einer Kolbenkaffeemaschine wird Kaffeepulver in eine Brühkammer eingemahlen und dann zu einem Kaffeekuchen verpresst. Anschließend wird unter Überdruck erhitztes Wasser durch den Kuchen hindurchgeleitet, um so Geschmacksstoffe aus dem Pulver zu extrahieren. Nach dem Hindurchflie-ßen einer produktspezifischen Wassermenge wird das befeuchtete Kaffeepulver ausgepresst und der Kaffeekuchen (Trester) in den Tresterbehälter abgegeben.

Ein typischer Brühraum einer Brüheinheit ist kreisrund und hat einen Durchmesser von z.B. etwa 45mm. Das heiße Wasser wird auf einer Seite durch eine Kolbeneinheit, die Douchette genannt wird, in den Brühraum eingeleitet und dabei möglichst gleichmäßig zerstäubt, um alle Teile des Kaffeekuchens mit Wasser zu benetzen. Auf der anderen Seite wird der extrahierte Kaffee durch einen Stempel, der eine weitere Kolbeneinheit bildet, ausgegeben. Dabei wird der extrahierte Kaffee häufig durch ein federbelastetes oszillierendes Bauteil (Cremaventil) geleitet, das nur einen kleinen Öffnungsspalt zulässt, um auf dem Kaffee die typische Crema zu erzeugen.

Damit sehr feine Partikel nicht mit in eine Kaffeetasse ausgegeben werden, befindet sich am Stempel häufig ein Feinsieb.

Über einen Antriebsmotor erfolgt eine relative Bewegung zwischen Stempel und Douchette, sodass der Abstand zwischen ihnen verändert werden kann. Über verschiedene Motormomente können dann definierte Presskräfte eingestellt werden.

Gleichzeitig muss auch eine Bewegung der Brühkammer erfolgen, um die Einwurfposition für das Kaffeepulver zu realisieren, einen abgedichteten Brühkammerraum zu schaffen und schließlich den ausgepressten Kaffeekuchen abwerfen zu können. Der Abwurf erfolgt bei horizontalen Brüheinheiten häufig über das Schwerkraftprinzip. Bei vertikalen Einheiten gibt es in der Regel eine zusätzliche Bewegungsmechanik, um den Kuchen über einen Schieber gezielt in den Tresterbehälter abzustoßen.

Aus der Kaffeekuchenhöhe kann indirekt auf die Einwaage geschlossen werden und diese dann gezielt auf eine Solleinwaage justiert werden, um beispielsweise veränderbare Mahlleistungen des Mahlwerks zu korrigieren. Die Stempel bzw. Douchetteposition bei der Pulververpressung werden in einfacher Weise über die Motorinkremente erfasst.

Grundsätzlich wird zwischen zwei Einbauarten von Brüheinheiten unterschieden. Horizontale (liegende) und vertikale (stehende) Einheiten. Die liegende Variante hat den Vorteil, dass die Kaffeemaschine sehr kompakt gestaltet werden kann, und dass der Kaffeetrester häufig nur über die Schwerkraft in den Tresterbehälter abgeworfen wird.

Stehende Brüheinheiten benötigen in der Regel für den Satzabwurf einen zusätzlichen Schiebermechanismus. Sie haben allerdings auch die Möglichkeit größere Einwaagen zu verarbeiten, und das Kaffeepulver lässt sich gleichmäßiger verdichten.

Es gibt unterschiedliche Antriebskonzepte, um die notwendigen Relativpositionen von Stempel, Douchette und Brühkammer anzufahren.

Zunächst können die beiden asynchronen Bewegungsabläufe über zwei verschiedene Antriebsmotoren umgesetzt werden. Ein Motor ist dann für die Bewegung der Brühkammer und ein weiterer für die Verpressung des Kaffeepulvers zuständig. Nachteil dieser einfachen Lösung ist, dass sich zwei Antriebe häufig sehr kostenintensiv auswirken. Zusätzliche Motoren werden oftmals auch für eine Schieberbewegung zum Abwurf des Tresters in eine Tresterschublade eingesetzt. Dabei ermöglichen Bewegungsgewinde wie z.B. Trapezspindeln mittels Kulissensteinen in vielen Konstruktionen die Drehbewegung des Antriebs in eine lineare Kolbenbewegung umzuwandeln.

Wenn nur ein Motor zur Verfügung steht, werden die Relativpositionen beispielsweise über Steuernuten (z.B. in einer Steuerwalze) erzeugt. Dabei werden mehrere Bauteile (Stempelschlitten, Brühbuchse) über eine Drehbewegung gleichzeitig in Nuten geführt. Nachteilig wirken sich hier aufwändige und nicht kompakte Konstruktionen aus, sowie hohe Biegemomente aufgrund außermittiger Führungen.

Vor allem im Haushaltsbereich ist häufig das Kniehebelwirkprinzip anzutreffen. Über einen aufwändigen kinematischen Ansatz wird dabei über mehrere Gelenke eine funktionsgerechte lineare Bewegung erzeugt. Nachteilig wirkt sich dabei in der Regel aus, dass zwar die Kolbenelemente schnell verfahren werden können, doch das Kaffeepulver produktunabhängig mit derselben Kraft verdichtet wird. Definierte und veränderbare Kräfte mit größeren Dimensionen sind nicht darstellbar.

Generell wird in günstigen Aufbauten von Brüheinheiten ein Kompromiss zwischen schnellem Verfahren der Kolbenfunktionselemente und einem definierten, einstellbaren Verpressen des Kaffeepulvers in Kauf genommen.

Das Dokument EP 2 907 427 B1 beschreibt einen nicht-linearen Getriebeabschnitt, durch welchen ein Kompromiss zwischen hohen Presskräften und gleichzeitig kurzen Verfahrzyklen erreicht wird. Zum Anfahren der verschiedenen Positionen werden die Funktionselemente mit großen Steigungen verfahren. Beim Verdichten des Kaffeepulvers wird der Antriebsmotor mit deutlich kleinerer Steigung untersetzt, um mit derselben Führung große Kräfte zu übertragen.

Das Dokument EP 0 521 561 A1 betrifft eine automatische Kaffeemaschine, die in kombinierter Form eine Antriebseinheit umfasst, die aus einem Gleichstrommotor besteht, mit dessen Welle eine Schnecke fest verbunden ist, die in der Lage ist, in einer axialen Richtung die abgedichtete Stange eines Ventilkörpers zu betätigen und mit Mitteln zur Übertragung der Bewegung mit einem Schieber in Eingriff zu kommen, der sich rechtwinklig zur Drehachse der Motorwelle bewegen kann, wobei mit diesem Schieber mittels geeigneter Kupplungen ein mit dem freien Ende der Kolbenstange fest verbundenes Formteil, wobei außerdem Mittel zum Aussto-ßen und Entfernen des verbrauchten Kaffeepulvers sowie Mittel zum Überwachen und Steuern der Leistungsaufnahme des Motors vorgesehen sind, wodurch die Zeitpunkte des Beginns und des Endes der Hübe des Kolbens während der Phasen der Abwärtsbewegung, des Einsetzens in den Filterhalter, des Zusammendrückens des Kaffeepulvers, der Aufwärtsbewegung und der seitlichen Drehung für den Ausstoß automatisch bestimmt werden können.

Diese Ausführungen haben sich bewährt, doch im Zuge von Kosteneinsparungen bei Bauteilen, Funktionsgruppen, Montagezeiten und Wartung gibt es einen ständigen Bedarf für Verbesserungen.

Die Erfindung hat daher die Aufgabe, eine Brüheinheit einer Kolbenkaffeemaschine vorteilhaft weiterzuentwickeln, um eine verbesserte Brüheinheit und eine verbesserte Kolbenkaffeemaschine zu schaffen.

Die Erfindung löst diese Aufgabe durch eine Brüheinheit mit dem Merkmal des Anspruchs 1 und durch eine Kolbenkaffeemaschine mit dem Merkmal des Anspruchs 28.

Ein Erfindungsgedanke ist es, dass sämtliche Übersetzungen beim Doppelspindelprinzip konstant sind, d.h. die Spindeln und Getriebe haben gleich bleibende Steigungen bzw. Übersetzungen. Durch ein Ausspindeln des Brühschlittens wird ein Stillstand des Brühschlittens realisiert, sodass in diesem Fall nicht übersetzt wird.

Eine erfindungsgemäße Brüheinheit einer Kolbenkaffeemaschine, wobei die Brüheinheit als eine Spindelbrüheinheit mit einem Brühschlitten als Brühkammer, zwei Kolbeneinheiten als Douchette und Stempel, einem Antriebsmotor und mindestens einem Getriebe ausgebildet ist, zeichnet sich dadurch aus, dass die Brüheinheit eine Doppelspindelanordnung mit einer Außenspindel und einer Innenspindel aufweist.

Ein besonderer Vorteil hierbei ist eine sehr kompakte und leichte Bauweise, die einen einfachen und damit kostengünstigen Aufbau ermöglicht.

In bevorzugter Ausführung weist die Außenspindel ein Bewegungsgewinde auf, welches mit einer in dem Brühschlitten axial festgelegten Außenspindelmutter in Eingriff steht. Somit können vorteilhaft kostengünstig am Markt vorhandene Bauteile mit hoher Qualität verwendet werden.

Es ist vorgesehen, dass in der bevorzugten Ausführung der Brühschlitten aus einer ersten Endstellung in eine Zwischenstellung, dann in eine zweite Endstellung und wieder zurück in die erste Endstellung verstellbar ist. Damit sind definierte Stellungen des Brühschlittens vorteilhaft einfach ermöglicht.

Ein besonderer Vorteil ergibt sich in der bevorzugten Ausführung, wenn das Bewegungsgewinde der Außenspindel in der ersten Endstellung und in der zweiten Endstellung des Brühschlittens außer Eingriff mit der Außenspindelmutter ist und eine Geschwindigkeit des Brühschlittens null beträgt, auch wenn sich die Außenspindel weiter dreht. Damit lässt sich auf einfache Weise eine Ruhestellung des Brühschlittens an einem Anschlag in der jeweiligen Endstellung ermöglichen, wobei trotzdem die Außenspindel angetrieben durch den Antriebsmotor die Innenspindel über das Getriebe weiter antreibt um die Innenspindel und somit die Douchette zu positionieren. Ein weiterer Motor ist nicht erforderlich.

In einer Ausführung ist die Außenspindel mit dem verstellbaren Brühschlitten verbunden, die Innenspindel ist mit der verstellbaren Douchette verbunden, und der Stempel ist ortsfest angeordnet. Außenspindel und Innenspindel sind einfach herzustellende Bauteile mit einer hohen Qualitätsstufe zu niedrigen Preisen.

Dabei ist vorgesehen, dass der verstellbare Brühschlitten mittels der Außenspindel und einer Führungsstange längsverschiebbar geführt ist, und dass die Douchette innerhalb des Brühschlittens längsverschiebbar geführt ist, wobei der Brühschlitten und die Douchette mit unterschiedlichen Geschwindigkeiten in gemeinsamen Bewegungsrichtungen verstellbar sind. Hierbei ergibt sich ein Vorteil in einem einfachen und kostengünstigen Aufbau, in dem sehr hohe Geschwindigkeiten realisierbar sind.

Eine vorteilhafte zentrische Krafteinleitung und damit hohe Steifigkeit der Brühgruppe wird dadurch ermöglicht, dass die Außenspindel von dem Antriebsmotor angetrieben ist und mit der Innenspindel über das mindestens eine Getriebe gekoppelt ist. Weitere zusätzliche Motoren sind nicht erforderlich.

Es ist vorteilhaft, wenn die Brüheinheit mindestens einen schaltbaren Elektromagneten aufweist, welcher den Brühschlitten in der jeweiligen Endstellung direkt oder indirekt über eine mechanische Verriegelung wieder lösbar fixiert, da auf diese Weise eine Vermeidung von Überrastgeräuschen von Bewegungsgewinde und Außenspindelmutter im "Stillstand" des Brühschlittens vermieden werden können.

In den Endstellungen des Brühschlittens kommt das Bewegungsgewinde der Außenspindel außer Eingriff mit der Außenspindelmutter des Brühschlittens. Dies wird als "Ausspindeln" bezeichnet. Damit der Brühschlitten aus diesen Endstellungen wieder heraus bewegt werden kann, muss die Außenspindelmutter des Brühschlittens wieder mit dem Bewegungsgewinde der Außenspindel in Eingriff gebracht werden. Dieser Vorgang wird als "Wiedereinspindelung" bezeichnet.

In einer Ausführung weist die Brüheinheit mindestens eine Wiedereinspindelungseinrichtung auf, welche einen erneuten Eingriff von Außenspindelmutter und Bewegungsgewinde in der ersten Endstellung oder der zweiten Endstellung bewirkt. Ein Vorteil besteht dabei darin, dass ein Wiedereinspindeln von Außenspindelmutter und Bewegungsgewinde auf eine einfache Weise mit einer nur geringen Anzahl von Bauteilen ermöglich wird.

Eine Ausführung sieht dazu vor, dass die mindestens eine Wiedereinspindelungseinrichtung mindestens eine Anschlageinheit mit einer jeweiligen Druckfeder aufweist. Dies sind einfache und kostengünstige Bauteile.

Dabei ist es vorteilhaft, wenn der Brühschlitten in der ersten Endstellung eine Druckfeder einer ersten Anschlageinheit vorspannt, und dass der Brühschlitten in der zweiten Endstellung eine Druckfeder einer zweiten Anschlageinheit vorspannt, um somit ein Kraftspeicherelement "aufzuladen".

Weiterhin ist dabei in einer Ausführung vorgesehen, dass die Druckfeder der ersten Anschlageinheit das Bewegungsgewinde der Außenspindel mit der Außenspindelmutter des Brühschlittens wieder in Eingriff bringt, wenn der Brühschlitten mittels der Außenspindel aus der ersten Endstellung verstellt wird, und dass die Druckfeder der zweiten Anschlageinheit das Bewegungsgewinde der Außenspindel mit der Außenspindelmutter des Brühschlittens wieder in Eingriff bringt, wenn der Brühschlitten mittels der Außenspindel aus der zweiten Endstellung verstellt wird.

In einer alternativen Ausführung weist die mindestens eine Wiedereinspindelungseinrichtung mindestens einen schaltbaren Elektromagneten auf, welcher auf den Brühschlitten in der jeweiligen Endstellung direkt oder indirekt über eine mechanische Vorrichtung einen Bewegungsimpuls ausübt, welcher einen erneuten Eingriff von Außenspindelmutter und Bewegungsgewinde in der ersten Endstellung oder der zweiten Endstellung bewirkt. Dies ergibt einen einfachen Aufbau mit einer sehr geringen Anzahl von zusätzlichen Bauteilen.

Die mindestens eine Wiedereinspindelungseinrichtung kann auch mindestens einen schaltbaren Elektromagneten mit einem beweglichen Kern aufweist. Der bewegliche Kern kann auf vorteilhaft einfache Weise einen Bewegungsimpuls auf den Brühschlitten ausüben.

Eine andere alternative Ausführung sieht vor, dass die mindestens eine Wiedereinspindelungseinrichtung mindestens zwei schaltbare und umpolbare Elektromagneten aufweist, von denen einer ortsfest und der andere an dem Brühschlitten angebracht ist. Dies ist vorteilhaft, da keine beweglichen Teile benötigt werden und die Elektromagneten nicht nur einfach gesteuert werden können, sondern auch handelsübliche kostengünstige Bauteile mit hoher Qualität sind.

Zur Wiedereinspindelung können auch Reibungselemente an der beweglichen Innenspindel angebracht sein, insbesondere an der Douchette (oder an dem Stempel). Durch die Reibkraft zwischen Douchette und Brühkammer wird die Außenspindelmutter des Brühschlittens wieder in das dazugehörige Außengewinde der Außenspindel gedrückt, sobald eine Bewegungsumkehr an der Innenspindel erfolgt.

Hierzu ist in einer Ausführung vorgesehen, dass die mindestens eine Wiedereinspindelungseinrichtung mindestens ein Reibungselement direkt an der beweglichen Innenspindel oder indirekt an einem an der Innenspindel angebrachten Bauteil in Zusammenwirkung mit dem Brühschlitten aufweist.

Auch hydraulische Dichtelemente an Stempel/Douchette können gezielt für diese Funktion genutzt werden. Durch eine zeitverzögerte Entlastung der Dichtungen nach Richtungsumkehr der Innenspindel wird eine hohe Reibkraft auf den Brühschlitten übertragen und dieser kurzzeitig mit der Innenspindelbewegung synchronisiert. So ergibt sich ein vorteilhafter Bewegungsimpuls auf den Brühschlitten, der im Wiedereinspindeln resultiert. Vorteilhaft wirkt sich dabei weiterhin aus, dass im übrigen Bewegungsverlauf nach Dichtungsentlastung die erhöhte Reibung nicht mehr vorhanden ist. Das vermeidet zusätzlichen Verschleiß der beweglichen Bauteile.

Dazu weist in einer weiteren Ausführung die mindestens eine Wiedereinspindelungseinrichtung mindestens ein Reibungselement auf, welches als ein mindestens ein hydraulisches Dichtelement ausgebildet ist.

Es ist dabei vorteilhaft, wenn das mindestens eine hydraulische Dichtelement eine an der Douchette oder an dem Stempel angebrachte Dichtung ist, welche durch Beaufschlagung mit einem Druck gesteuert ist. Eine vorteilhafte Steuerung ist ermöglicht, wenn das mindestens eine hydraulische Dichtelement über ein Magnetventil gesteuert ist. Auf diese Weise kann bei zwei oder mehreren derartiger Dichtungen eine separate unabhängige Steuerung der hydraulischen Dichtelemente ermöglicht werden.

Auf der Seite der beweglichen Innenspindel ist auch ein Reibelement auf der mitgeführten Verdrehsicherung denkbar. Dieses gibt dem Brühschlitten den notwendigen Impuls zum Wiedereinspindeln und kann in den anderen Stellungen des Brühschlittens verschoben werden ohne die Brüheinheit zu blockieren.

Dazu weist in einer anderen Ausführung die mindestens eine Wiedereinspindelungseinrichtung eine Mitnehmereinrichtung mit mindestens einem Mitnehmer auf, welcher einerseits an der Innenspindel oder einem mit der Innenspindel verbundenen Bauteil und andererseits an der Führungsstange verschiebbar geführt ist, wobei der Mitnehmer in einer Ruheposition in Bezug auf die Innenspindel oder das mit der Innenspindel verbundene Bauteil mit einer bestimmten Haltekraft gehalten ist, die in der Ruheposition größer ist als außerhalb der Ruheposition. Ein Vorteil ist dabei ein geringer Raumbedarf.

In einer noch weiteren Ausführung weist der mindestens eine Mitnehmer ein erstes Halteelement auf, wobei ein zweites Halteelement an oder in der Innenspindel oder an oder in dem mit der Innenspindel verbundenen Bauteil angebracht ist, wobei das erste Halteelement und das zweite Halteelement in der Ruheposition des Mitnehmers die bestimmte Haltekraft erzeugen. Damit kann ein vorteilhaft einfacher Aufbau ermöglicht werden.

In einer noch weiteren Ausführung ist das erste Halteelement und das zweite Halteelement jeweils ein Permanentmagnet. Dies sind einfache und kostengünstige Bauteile hoher Qualität.

Alternativ kann das erste Halteelement ein mit Federkraft beaufschlagtes Kugeldruckelement sein, welches in der Ruheposition des Mitnehmers mit einer korrespondierenden Einformung oder Nut in der Innenspindel oder in dem mit der Innenspindel verbundenen Bauteil in Kontakt steht.

Um Reibung und den u.U. damit erhöhten Anteil an Verschleißteilen zu vermeiden, ist es vorteilhaft, das Reibelement über den magnetisch wirksamen oder mit Federkraft beaufschlagten Mitnehmer zu ersetzen. In der durch die Innenspindel parallel mitbewegten Verdrehsicherung, die als Sicherungsstange ausgebildet ist, befindet sich ein weiterer Permanentmagnet, der so gepolt ist, dass er eine Anziehungskraft auf den Mitnehmer bewirkt bzw. eine Nut für das Kugeldruckelement aufweist.

Die Fügekraft dieser Verbindung ist groß genug für den Impuls zum Wiedereinspindeln der Brühbuchse aber klein genug, sodass ein Verklemmen der Brüheinheit vermieden wird.

Eine noch weitere Ausführung sieht vor, dass die Innenspindel ein Bewegungsgewinde aufweist, welches mit einer ortsfest drehbar gelagerten Innenspindelmutter in Eingriff steht. Auf diese Weise kann vorteilhaft eine von der Außenspindel durch das Getriebe übertragene Drehung auf die Innenspindelmutter eine Längsverstellung der Innenspindel und somit der damit verbundenen Douchette bewirken.

Für eine besonders vorteilhafte Bauraumreduzierung kann die Innenspindelmutter ein Bestandteil eines Abtriebsrades des mindestens einen Getriebes sein.

In einer noch weiteren Ausführung steht die Innenspindel mit einer Sicherungsstange als Verdrehsicherung in Verbindung. Die Sicherungsstange ergibt eine zusätzliche vorteilhafte Führungsstabilisierung der Douchette.

Es ist außerdem vorteilhaft für einen kompakten Aufbau, wenn die Sicherungsstange, die Außenspindel, die Innenspindel und die Führungsstange parallel zueinander angeordnet sind.

Wenn der Antriebsmotor über ein Getriebe mit der Außenspindel gekoppelt ist, können vorteilhaft durch Anpassung dieses Getriebes unterschiedliche Arten von Antriebsmotoren verwendet werden.

Eine erfindungsgemäße Kolbenkaffeemaschine weist die oben beschriebene Brüheinheit auf.

Weitere vorteilhafte Ausgestaltungen sind den übrigen Unteransprüchen zu entnehmen.

Im Folgenden werden die Vorteile gegenüber herkömmlichen Brüheinheits- Konstruktionen für Kaffeemaschinen herausgestellt:
- Sehr kompakte und leichte Bauweise
- Einfacher und damit kostengünstiger Aufbau
- Sehr hohe Geschwindigkeiten realisierbar
- Zentrische Krafteinleitung und damit hohe Steifigkeit der Brühgruppe
- Definierter Tresterabwurf
- Integrierte Übersetzungsstufe durch den Riementrieb zwischen den Spindeln
- Lediglich ein Antriebsmotor notwendig
- Sehr viele Übersetzungsverhältnisse sind durch passende Auswahl der Spindelsteigungen und der Riemenübersetzung konstruktiv möglich -> flexible Anpassung der Brüheinheit auf ausgewählte Antriebsmotoren
- Mit vergleichsweise leistungsreduziertem Antrieb sind sowohl hohe Verfahrgeschwindigkeiten als auch in einer großen Spannweite einstellbare Anpresskräfte realisierbar
- Durchmahlstellung in den Tresterbehälter
- Gleichteile bei Baugruppen Stempel und Douchette und den Grundplatten
- Selbsthemmung der inneren Spindel während des Brühprozesses und somit kein Gegenhalten des Antriebsmotors erforderlich
- Crema produktspezifisch auswählbar (optionaler Brühstrang ohne CremaVentil)
- Hydraulische Zu- und Abwege sind in der Kolbeneinheit integriert (spindelgeführte FEP- Rohre)

Nachfolgend wird die Erfindung anhand eines Ausführungsbeispiels und einer Variante unter Bezug auf die Zeichnungen näher beschrieben. Die Figuren dienen nur zur näheren Erläuterung der Erfindung und sind nicht beschränkend für die Erfindung. Einzelne beschriebene Merkmale können im Rahmen des allgemeinen Fachwissens auch für sich genommen in weitere Ausführungsvarianten übertragen werden. Es zeigen:
- Figur 1:: eine schematische Perspektivansicht eines Ausführungsbeispiels einer erfindungsgemäßen Brüheinheit einer Kaffeemaschine;
- Figur 2-3:: verschiedene schematische Ansichten des Ausführungsbeispiels nach Figur 1 ;
- Figur 4:: eine schematische Schnittansicht nach Linie IV-IV aus Figur 3;
- Figur 5:: eine schematische Schnittansicht nach Linie V-V aus Figur 3;
- Figur 6:: eine schematische Schnittansicht nach Linie VI-VI aus Figur 2;
- Figur 7-8:: schematische Schnittansichten gemäß Figur 5 in verschiedenen Endstellungen der erfindungsgemäßen Brüheinheit;
- Figur 9-18: schematische Ansichten der erfindungsgemäßen Brüheinheit in verschiedenen Positionen;
- Figur 19-20: schematische Perspektivansichten einer Variation des Ausführungsbeispiels nach Figur 1 mit einem Mitnehmer;
- Figur 21: eine schematische Schnittansicht des Mitnehmers nach Figur 19-20;
- Figur 22-27: schematische Ansichten der Variation nach Figur 19-20 in verschiedenen Positionen; und
- Figur 28-30: vergrößerte schematische Schnittansichten des Mitnehmers in den verschiedenen Positionen nach Figur 22-27.

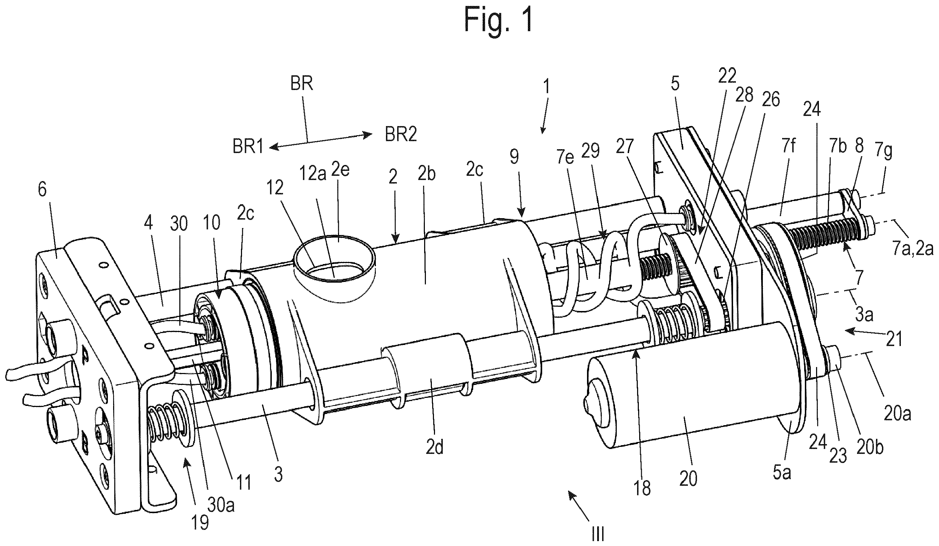

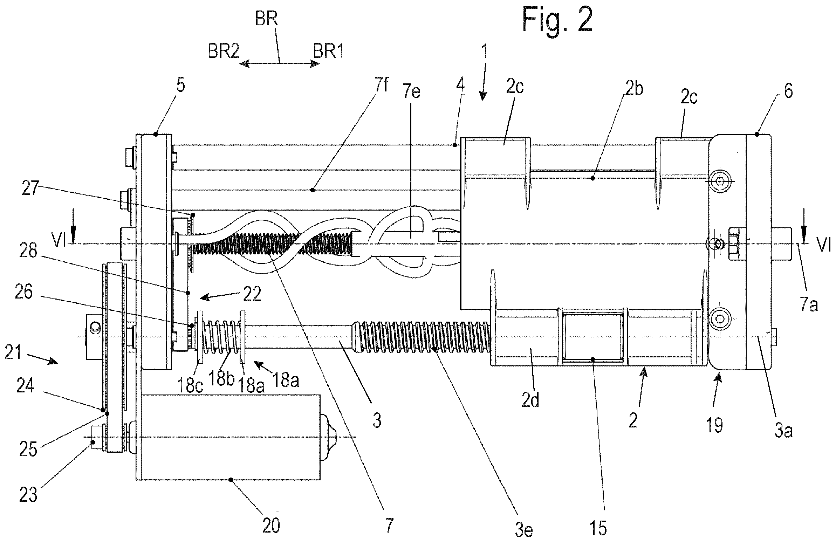

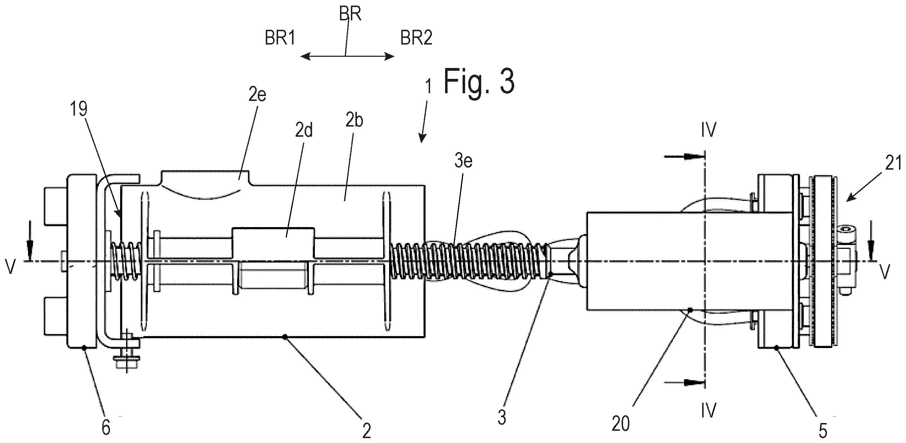

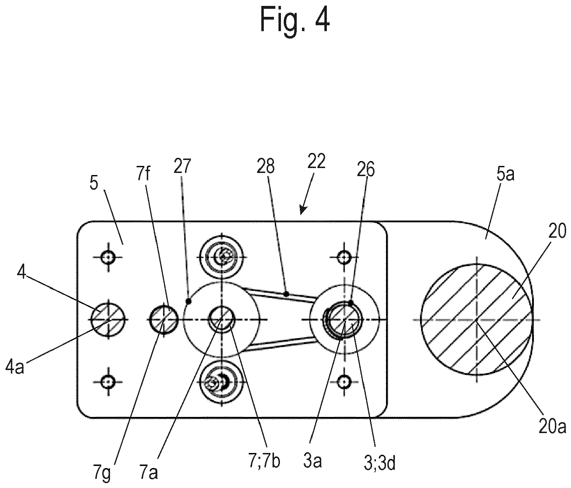

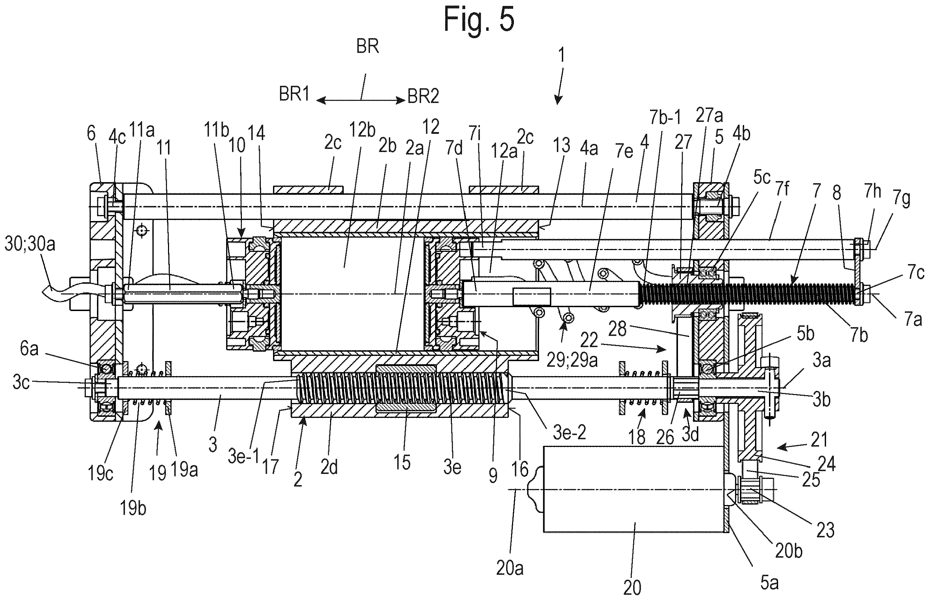

In Fig. 1 ist eine schematische Perspektivansicht eines Ausführungsbeispiels einer erfindungsgemäßen Brüheinheit 1 einer Kolbenkaffeemaschine dargestellt. Fig. 2 zeigt eine schematische Draufsicht auf die Unterseite der Brüheinheit 1 nach Fig. 1. Eine schematische Seitenansicht der Brüheinheit 1 in Blickrichtung III in Fig. 1 ist in Fig. 3 dargestellt. In Fig. 4 ist eine schematische Schnittansicht nach Linie IV-IV aus Fig. 3 gezeigt. Fig. 5 stellt eine schematische Schnittansicht nach Linie V-V aus Fig. 3 dar.

Bei dem hier aufgeführten Ausführungsbeispiel handelt es sich um eine horizontale Brüheinheit 1. Die Ausführung kann auch auf eine vertikale Brüheinheit 1 oder eine mit beliebig anderen Neigungswinkeln übertragen werden. Die Brüheinheit 1 ist eine Spindelbrüheinheit.

Die Brüheinheit 1 umfasst hier einen Brühschlitten 2, der auch als Brühkammer bezeichnet wird, eine Außenspindel 3, eine Führungsstange 4, eine erste Grundplatte 5 und eine zweite Grundplatte 6, eine Innenspindel 7, zwei Kolbeneinheiten, nämlich eine so genannte Douchette 9 und einen Stempel 10, und einen Antriebsmotor 20.

Das System bietet die Möglichkeit, die erforderlichen Relativpositionen zwischen dem Stempel 10, der Douchette 9 und dem Brühschlitten 3 der Brüheinheit 1 für eine nicht gezeigte Kolbenkaffeemaschine mittels einer Doppelspindelanordnung und einem Antrieb zu realisieren.

Über den (nur einen) Antriebsmotor 20 erfolgt eine relative Bewegung zwischen Stempel 10 und Douchette 9, sodass der Abstand zwischen ihnen verändert werden kann. Über verschiedene Motormomente können dann definierte Presskräfte eingestellt werden. Gleichzeitig muss auch eine Bewegung des Brühschlittens 2 erfolgen, um eine Einwurfposition für das Kaffeepulver zu realisieren, einen abgedichteten Brühkammerraum zu schaffen und schließlich den ausgepressten Kaffeekuchen abwerfen zu können.

Die Doppelspindelanordnung umfasst die Außenspindel 3 und die Innenspindel 7.

Die Außenspindel 3 verstellt den Brühschlitten 2, die Innenspindel 7 verstellt die Douchette 9, wobei der Stempel 10 ortsfest an der zweiten Grundplatte 6 angebracht ist.

Der Brühschlitten 2 wird aus einer ersten Endstellung in eine Zwischenstellung, dann in eine zweite Endstellung und wieder zurück in die erste Endstellung verstellt. Dabei wird die Douchette 9 in unterschiedliche Positionen in Bezug auf den Brühschlitten 2 und den Stempel 10 verstellt.

Die Douchette 9 ist immer in dem Brühschlitten 2 angeordnet und kann unterschiedliche Relativstellungen zu dem Brühschlitten 2 einnehmen. Diese Relativstellungen werden durch die Bewegungen der Douchette 9 aufgrund der Innenspindel 7 und durch die Bewegungen des Brühschlittens 2, der von der Außenspindel 3 verstellbar ist, unabhängig voneinander ermöglicht.

Der Stempel 10 kann sich dabei außerhalb oder innerhalb des Brühschlittens 2 befinden. Da der Stempel 10 hier ortsfest angeordnet ist, sind die Relativstellungen/-bewegungen des Brühschlittens 2 und der Douchette 9 zu dem Stempel 10 durch die Innenspindel 7 (Douchette 9) und die Außenspindel 3 (Brühschlitten 2) ermöglicht.

Die Douchette 9 (oder der Stempel 10) und der Brühschlitten 3 weisen immer eine gemeinsame Fahrtrichtung auf, haben allerdings unterschiedliche Geschwindigkeiten (Differenzgeschwindigkeiten), um dadurch die notwendigen Relativstellungen zwischen diesen beiden Bauteilen zu erreichen. Zur Erleichterung der Darstellung dieser Fahrtrichtungen ist in jeder Figur ein Doppelpfeil Bewegungsrichtung BR mit zwei gegenläufigen Bewegungsrichtungen BR1 und BR2 angegeben.

Die Außenspindel 3 mit einer Außenspindelachse 3a, die Führungsstange 4 mit einer Führungsachse 4a und die Innenspindel 7 mit einer Innenspindelachse 7a sind parallel zueinander angeordnet. Die Bewegungsrichtungen BR1 und BR2 verlaufen parallel zu diesen Achsen 3a, 4a, 7a.

Die beiden Grundplatten 5 und 6 der Brüheinheit 1 sind hier rechteckige Platten, parallel zueinander und rechtwinklig zu den Achsen 3a, 4a, 7a angeordnet.

An der in Fig. 1 rechts angeordneten ersten Grundplatte 5 ist eine Halteplatte 5a befestigt, welche rechtwinklig von der Außenspindelachse 3a nach außen hervorsteht und eine Halterung für den Antriebsmotor 20 bildet.

Die erste Grundplatte 5 weist ein Lager 5b für die Außenspindel 3 und ein Lager 5c für die Innenspindel 7 auf.

Die zweite Grundplatte 6 weist ein dem Lager 5b gegenüberliegendes Lager 6a für die Außenspindel 3 auf. Zudem ist der Stempel 10 mittels eines stangenförmigen Stempelhalters 11 an der zweiten Grundplatte 6 befestigt. Dazu ist der Stempelhalter 11 mit einem ersten Stempelende 11a mit der Grundplatte 6 und mit einem zweiten Stempelende 11b mit dem Stempel 10 verbunden. Der Stempel 10, der Stempelhalter 11, die Douchette 9, der Brühschlitten 2 und die Innenspindel 7 sind koaxial zu einer Brühschlittenachse 2a angeordnet.

Die Außenspindel 3 und die Führungsstange 4, die auch Zugstange genannt wird, verbinden die beiden Grundplatten 5, 6 miteinander.

Die Außenspindel 3 weist ein Antriebsende 3b auf, mit welchem die Außenspindel 3 in dem Lager 5b der ersten Grundplatte 5 drehbar gelagert ist. Ein Lagerende 3c der Außenspindel 3 ist dem Antriebsende 3b in dem weiteren Lager 6a in der zweiten Grundplatte 6 drehbar gelagert. Auf diese Weise verbindet die Außenspindel 3 die Grundplatte 5 und 6 auf der einen Seite.

Das Antriebsende 3b der Außenspindel 3 erstreckt sich durch das Lager 5b und somit durch die erste Grundplatte 5 hindurch und steht von dieser dann hervor. Das Antriebsende 3b ist einerseits über ein erstes Getriebe 21 mit dem Antriebsmotor 20 und andererseits über ein zweites Getriebe 22 mit der Innenspindel 7 gekoppelt. Dies wird unten noch detailliert erläutert.

Die Führungsstange 4 ist mit einem Stangenende 4b mit der ersten Grundplatte 5 und mit einem anderen Stangenende 4c mit der zweiten Grundplatte 6 fest verbunden, z.B. verschraubt, wodurch die Führungsstange 4 die Grundplatten 5, 6 verbindet.

Die Grundplatten 5, 6 sind aus Gleichteilen und vorzugsweise aus Kunststoff ausgebildet. Zur Versteifung und Axialsicherung der dort eingebrachten Lager 5b, 5c, 6a, z.B. Kugellager, sind die Grundplatten 5, 6 mit Blechteilen (nicht bezeichnet) verschraubt.

Der Brühschlitten 2 weist ein im Wesentlichen hohlzylindrisches Gehäuse 2b mit einem kreisförmigen Querschnitt und der Brühschlittenachse 2a auf. In dem Gehäuse 2b ist ein Brühzylinder 12 mit einem Innenraum 12a, der ebenfalls einen kreisförmigen Querschnitt aufweist, koaxial zu der Brühschlittenachse 2a angeordnet. In den Brühzylinder 12 ist eine Öffnung in seine umlaufende Wand eingebracht, welche mit einer Einfüllöffnung 2e des Gehäuses 2b des Brühschlittens 2 kommuniziert.

Der Innenraum 12a des Brühzylinders 12 des Brühschlittens 2 nimmt die Douchette 9 und den Stempel 10 in bestimmten Positionen der Brüheinheit 1 auf, die unten noch detailliert beschrieben werden. Die Douchette 9 und der Stempel 10 sind relativ zu dem Brühzylinder 12 in dem Innenraum 12a in den Bewegungsrichtungen BR1 und BR2 verschiebbar geführt. Wenn sich die Douchette 9 und der Stempel 10 beide in bestimmten Positionen der Brüheinheit 1 in dem Innenraum 12a befinden, stehen sie sich in unterschiedlichen Abständen gegenüber und legen zwischen sich einen Raum fest, der im Weiteren als Brühraum 12b bezeichnet wird (siehe Fig. 5, 6, 7, 12, 14, 16).

Der Brühschlitten 2 weist eine erste Stirnseite 13 auf, welche zu der ersten Grundplatte 5 weist.

Eine zweite Stirnseite 14 des Brühschlittens 2 weist zu der zweiten Grundplatte 6. Der Brühschlitten 2 wirkt mit dem Stempel 10 dergestalt zusammen, dass der Brühzylinder 12 des Brühschlittens 2 mit der zu der zweiten Stirnseite 14 gehörenden Öffnung über den Stempel 10 bewegt wird.

Der Brühschlitten 2 wird zum einen über die Außenspindel 3 und zum anderen über die Führungsstange 4 zwischen diesen Grundplatten 5 und 6 in beiden Bewegungsrichtungen BR1 und BR2 verschiebbar geführt.

Die Führung des Brühschlittens 2 mittels der Außenspindel 3 und der Führungsstange 4 erfolgt an beiden Längsseiten des Gehäuses 2b. Dazu weist das Gehäuse 2b des Brühschlittens 2 an der einen Längsseite der Führung durch die Führungsstange 4 an beiden Enden jeweils ein Führungslager 2c auf, durch welche sich die Führungsstange 4 erstreckt. Diese Führungslager 2c sind beispielsweise als Gleitlager ausgebildet, können natürlich auch andere Lagerelemente aufweisen.

An der anderen Längsseite des Gehäuses 2b ist ein rohrförmiger Antriebsabschnitt 2d angeformt, welcher in seiner Mitte eine Außenspindelmutter 15 aufweist. Der Antriebsabschnitt 2d weist eine erste Stirnseite 16 auf, welche der ersten Grundplatte 5 gegenübersteht. Eine zweite Stirnseite 17 des Antriebsabschnitts 2d weist zu der zweiten Grundplatte 6.

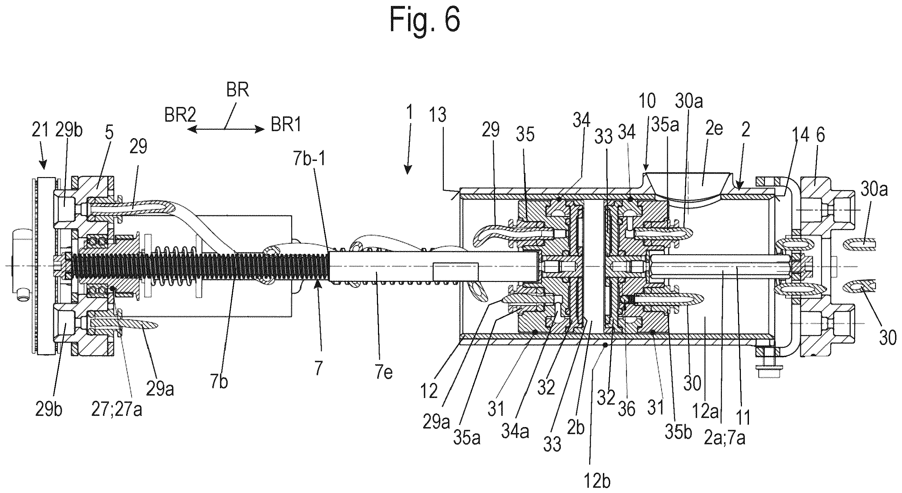

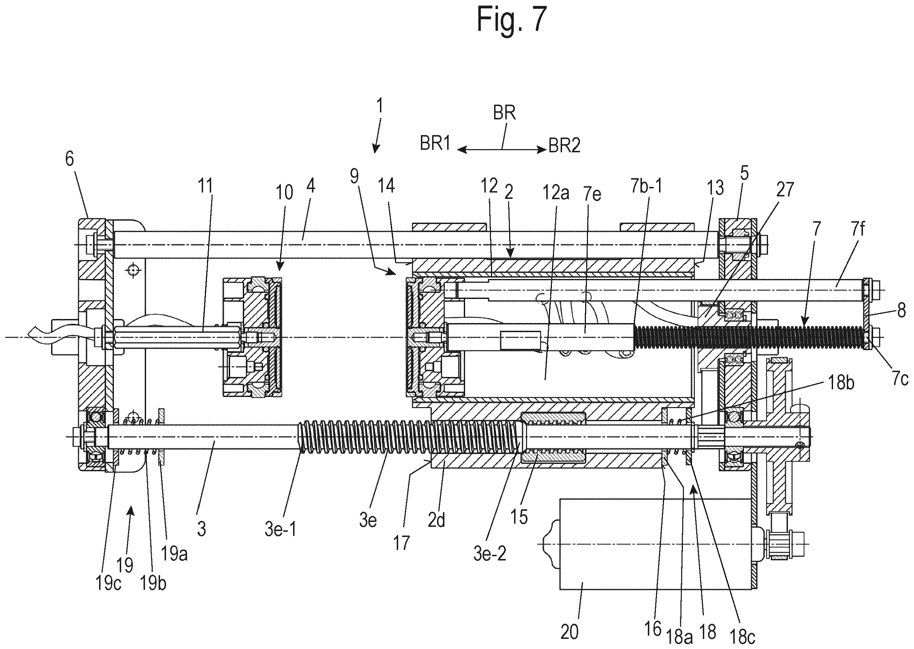

Die Außenspindel 3 erstreckt sich durch den Antriebsabschnitt 2d und die Außenspindelmutter 15 hindurch. Ein Bewegungsgewinde 3e der Außenspindel 3 steht mit der Außenspindelmutter 15 in Eingriff, wobei das Bewegungsgewinde 3e jedoch in Endstellungen des Brühschlittens 2 außer Eingriff mit der Außenspindelmutter 15 kommt. Dies wird unten noch im Zusammenhang mit den Figuren 6 und 7 näher erläutert.

Die Douchette 9 ist mit der Innenspindel 7 fest verbunden und mittels dieser in dem und in den Innenraum 12a des Brühzylinders 12 in den Bewegungsrichtungen BR1 und BR2 verschiebbar. Durch die zu der ersten Stirnseite 13 gehörende Öffnung des Brühzylinders 12 wird die Douchette 9 in den Brühzylinder 12 eingeführt.

Die Innenspindel 7 umfasst die Innenspindelachse 7a, ein Bewegungsgewinde 7b, ein erstes Spindelende 7c, ein zweites Spindelende 7d und einen Spindelabschnitt 7e ohne Gewinde. Weiterhin steht die Innenspindel 7 mit einer Sicherungsstange 7f mit einer Stangenachse 7g, zwei Stangenenden 7h, 7i und einer Sicherungslasche 8 zum Zwecke einer Verdrehsicherung der Innenspindel 7 in Verbindung.

Ausgehend von dem ersten Spindelende 7c, welches außerhalb und in Fig. 5 nach rechts von der ersten Grundplatte 5 hervorsteht, schließt sich in Bewegungsrichtung BR1 auf den Brühschlitten 2 das Bewegungsgewinde 7b an, welches über einen Gewindeauslauf 7b-1 in einen glatten Spindelabschnitt 7e übergeht. Ein Außendurchmesser des Spindelabschnitts 7e ist größer als ein Außendurchmesser des Bewegungsgewindes 7b. Der Spindelabschnitt 7e weist an seinem freien Ende das zweite Spindelende 7d der Innenspindel 7 auf. Das zweite Spindelende 7d ist fest mit der Douchette 9 verbunden.

Die Innenspindel 7 erstreckt sich mit ihrem Bewegungsgewinde 7b durch die erste Grundplatte 6 durch eine Innenspindelmutter 27a hindurch. Die Innenspindelmutter 27a ist hier Bestandteil eines Abtriebsrades 27 des zweiten Getriebes 22 und in dem Lager 5c in der Grundplatte 6 drehbar gelagert und axial festgelegt.

Die Sicherungsstange 7f, die auch Zugstange genannt wird, ist in einem Abstand parallel zu der Innenspindel 7 angeordnet, wobei ein erstes Stangenende 7b mit der Sicherungslasche 8 fest verbunden ist. Die Sicherungslasche 8 ist ihrerseits mit dem ersten Spindelende 7c der Innenspindel 7 drehfest verbunden, wodurch die Innenspindel 7 an einer Verdrehung um ihre Innenspindelachse 7a gehindert ist.

Die Sicherungsstange 7f erstreckt sich durch eine nicht bezeichnete Durchgangsöffnung durch die erste Grundplatte 6 hindurch parallel zu der Innenspindel 7 bis an die Douchette 9 und ist mit dieser fest verbunden. Die Sicherungsstange 7f ist in der Grundplatte 6 verschiebbar geführt, wobei sie auf oben beschriebene Weise mit der Innenspindel 7 die gleiche Verschiebebewegung ausführt.

Die Bewegungsmechanik der Brüheinheit 1 basiert auf zwei Gewindespindeltrieben, nämlich auf der Außenspindel 3 und der Innenspindel 7. Das Bewegungsgewinde 3e der Außenspindel 3 und das Bewegungsgewinde 7b der Innenspindel 7 weisen unterschiedliche Gewindesteigungen auf.

Die Außenspindel 3 ist mit dem Antriebsmotor 20 über das erste Getriebe 21 gekoppelt, wobei die Außenspindel 3 und die Innenspindel 7 über das zweite Getriebe 22 miteinander synchronisiert sind.

Die Getriebe 21 und 22 sind hier als Zugmittelgetriebe mit Zahnriemen ausgebildet. Es ist auch möglich, dass die Getriebe 21, 22 mit Zahnrädern oder in Kombination mit Zahnriemen aufgebaut sein können. Auch könnte eines oder beide Getriebe 21, 22 mehrstufig sein.

Das erste Getriebe 21 umfasst ein Antriebsrad 23, welches mit einer Welle eines Motorabtriebs 20b drehfest verbunden ist, ein Abtriebsrad 24, das mit dem Antriebsende 3b der Außenspindel drehfest verbunden ist, und einen Zahnriemen als Zugmittel 24. Das erste Getriebe 21 ist hier ein Untersetzungsgetriebe zur Anpassung des Antriebsmotors 20.

Das zweite Getriebe 22 umfasst ein Antriebsrad 26, welches auf einem Abtriebsabschnitt 3d der Außenspindel 3 mit dieser drehfest verbunden ist, das Abtriebsrad 27, mit der Innenspindelmutter 27a, und einen Zahnriemen als Zugmittel 28. Das zweite Getriebe 22 dient als Synchrongetriebe zur Verstellung der Innenspindel 7.

Die Außenspindel 3 ist die Antriebswelle der Brüheinheit 1 und sorgt über die an dem Brühschlitten 2 in dessen Antriebsabschnitt 2d verdrehgesichert montierte Außenspindelmutter 15 für eine lineare Bewegung des Brühschlittens.

Die Kopplung mittels des zweiten Getriebes 22 über den Zahnriemen 28 mit dem Abtriebsrad 27 sorgt gleichzeitig für eine Drehbewegung der Innenspindelmutter 27a, welche mit dem Abtriebsrad 27 verbunden ist. Hier ist die Innenspindelmutter 27a in das Abtriebsrad 27 eingeformt und bildet mit diesem ein Bauteil (siehe auch Fig. 4). Natürlich können auch zwei separate Bauteile, die miteinander gekoppelt sind, zur Anwendung kommen. Diese Innenspindelmutter 27a übernimmt somit gleichzeitig die Funktion des inneren Zahnriemenrads als Abtriebsrad 27. Dadurch erfolgt eine lineare Bewegung der Douchette 9, die an dem zweiten Spindelende 7d der Innenspindel 7 befestigt ist. Eine Verdrehsicherung, welche die schon oben beschriebene Sicherungsstange 7f beinhaltet, sorgt dafür, dass die Douchette 9 und die Innenspindel 7 nicht um die eigene Achse (Innenspindelachse 7a) mitgedreht werden, sondern lediglich axial in den Bewegungsrichtungen BR1, BR2 verfährt.

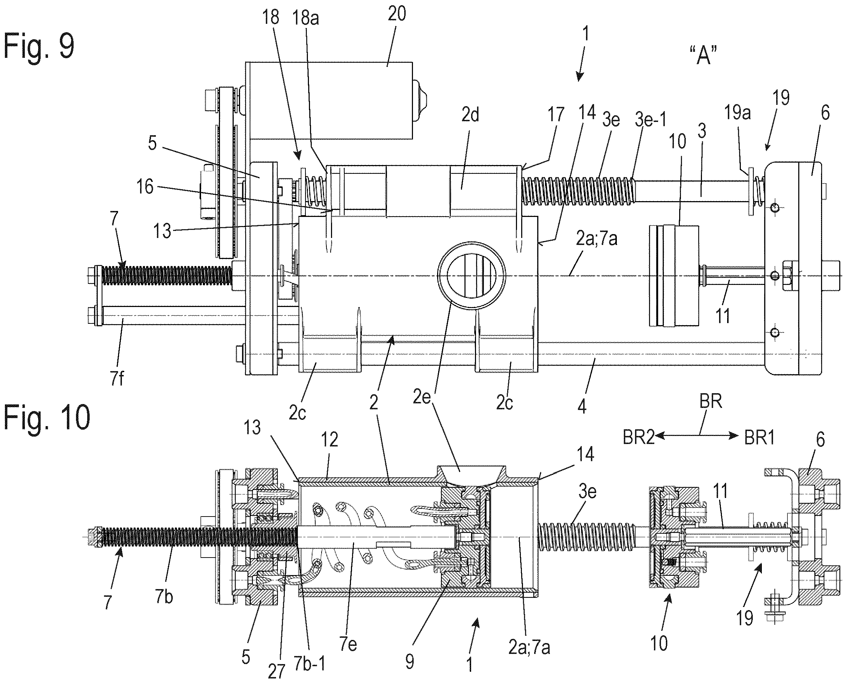

Das Bewegungsgewinde 7b der Innenspindel 7 weist eine kleinere Steigung als das Bewegungsgewinde 3e der Außenspindel 3 auf. Aus diesem Grund ist die Bewegungsgeschwindigkeit des Brühschlittens 2 um ein Vielfaches größer als die der Douchette 10 mit der Innenspindel 7. Vorteilhaft wird die Steigung der Innenspindel 7 so gewählt, dass diese während des Brühprozesses selbsthemmend wirkt. Dies wird unten im Zusammenhang mit den Figuren 9 bis 18 weiter erläutert.

Über die Übersetzung des zweiten Getriebes 22 als Synchrongetriebe von Außenspindel 3 und Innenspindel 7 kann dieser Effekt beliebig angepasst werden. Mit diesem Prinzip können Relativstellungen zwischen Douchette 9 und Brühschlitten 2 erzeugt werden.

In Fig. 6 ist eine schematische Schnittansicht nach Linie VI-VI aus Figur 2 dargestellt und dient zur weiteren Beschreibung der Douchette 9 und des Stempels 10.

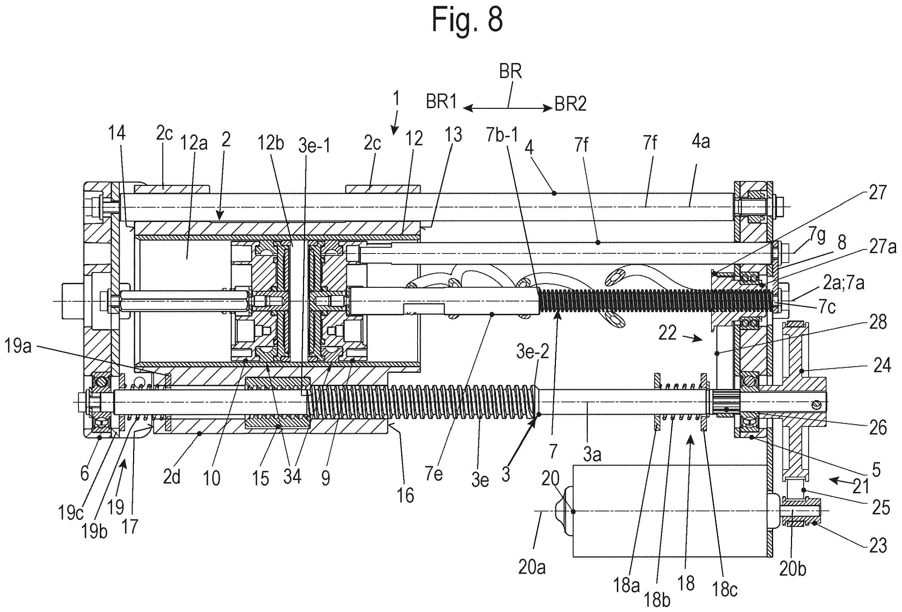

Die Brüheinheit 1 steht in einer von zwei so genannten Endstellungen, die unten im Zusammenhang mit Fig. 7 und 8 noch im Detail beschrieben werden.

In dem gezeigten Ausführungsbeispiel sind die Douchette 9 und der Stempel 10 dergestalt aufgebaut, dass sie aus Gleichteilen zusammengesetzt sind. Diese Gleichteile sind jeweils ein erstes Schalenelement 31, ein zweites Schalenelement 32, ein Siebelement 33 und eine Dichtung 34. Die ersten Schalenelemente 31 sind jeweils mit den zweiten Schalenelementen 32 zentrisch verspannt.

Die ersten Schalenelemente 31 dienen jeweils als Basis und Träger des jeweiligen zweiten Schalenelementes 32 und der jeweiligen Dichtung 34. Die zweiten Schalenelemente 32 sind als Halter für jeweils ein oder mehrere Siebelemente 33 ausgebildet. Zwischen dem ersten Schalenelement 31 und dem zweiten Schalenelement 32 ist jeweils eine umlaufende Dichtung 34 angeordnet. Die Außendurchmesser der ersten Schalenelemente 31, der zweiten Schalenelemente 32 und der Dichtungen 34 sind hier gleich groß und korrespondieren mit einem Innendurchmesser des Innenraums 12a des Brühzylinders 12. Die ersten Schalenelemente 31 sind mit hydraulischen Anschlüssen 35, 35a, 35b zum Anschluss von flexiblen Schläuchen 29, 29a, 30, 30a versehen. Auf diese Weise sind hydraulische Zu- und Abwege in Douchette 9 und Stempel 10 integriert.

Die Douchette 9 und der Stempel 10 sind in der Brüheinheit 1 so angeordnet, dass sich ihre Stirnseiten mit den Siebelementen 33 gegenüberstehen. Diese Seite werden im Weiteren Druckseiten genannt, wobei die anderen Seiten von Douchette 9 und Stempel 10 als Rückseiten bezeichnet werden. In den unterschiedlichen Positionen, die im Zusammenhang mit den Figuren 9 bis 18 noch ausführlich beschrieben werden, wird der Raum, den diese Druckseiten von Douchette 9 und Stempel 10 festlegen, als Brühraum 12b bezeichnet, wenn Douchette 9 und Stempel 10 beide innerhalb des Brühzylinders 12 positioniert sind.

Der Anschluss 35 der Douchette 9 dient zur Zuleitung von heißem Wasser durch das Siebelement 33 in den Brühraum 12b. Das heiße Wasser wird dabei möglichst gleichmäßig zerstäubt, um alle Teile eines im Brühraums 12b befindlichen Kaffeekuchens mit Wasser zu benetzen. Das heiße Wasser wird durch den Schlauch 29 von einem nicht weiter beschriebenen Anschluss 29b an der zweiten Grundplatte 6 zugeführt. Die dazu gehörigen Funktionsgruppen zur Erzeugung von heißem Wasser sind hier nicht gezeigt.

Der weitere Anschluss 35a der Douchette 9 verbindet einen Dichtungsanschluss 34a der Dichtung 34 mit einem weiteren Schlauch 29a für Druckwasser, das der Schlauch 29a von einem weiteren Anschluss 29b der zweiten Grundplatte 6 für die Dichtungen 34 (falls Dichtungen mit Wasserbeaufschlagung verwendet werden) zuleitet. Ebenso kann die Dichtung 34 des Stempels 10 mit Wasserdruck über den Anschluss 35a und den Schlauch 30a beaufschlagt. Auf diese Weise werden die Dichtungen 34 durch den Wasserdruck vergrößert und gewährleisten eine Abdichtung des Brühraums 12b während eines Brühvorgangs.

Der aus dem Kaffeekuchen in dem Brühraum 12b extrahierte Kaffee wird durch das Siebelement 33 des Stempels 10 durch den Anschluss 35b (Brühausgang) in einen Schlauch 30 ausgegeben. Die an dem Stempel 10 angeschlossenen Schläuche 30, 30a sind durch eine nicht bezeichnete Öffnung in der zweiten Grundplatte 6 geführt. Die Schläuche 29, 29a; 30, 30a sind hier als so genannte spindelgeführte FEP-Rohre ausgebildet. Natürlich können auch andere Ausführungen verwendet werden.

In dem gezeigten Beispiel ist zwischen dem Anschluss 35b des Stempels 10 und dem zweiten Schalenelement 32 ein Ventil 36 angeordnet. Das Ventil 36 wird Cremaventil genannt und bildet hier ein federbelastetes oszillierendes Bauteil aus einer Kugel und einer Druckfeder, welches der Kaffee durchläuft. Das Ventil 36 lässt nur einen kleinen Öffnungsspalt zu, um auf dem Kaffee die typische Crema zu erzeugen.

Durch zusätzliche Montage einer Cremadüse bestehend aus dem Oszillationselement (z.B. Kugel) und dem Federelement (z.B. Druckfeder) wird die Douchette 9 zum Stempel 10, da beide vorteilhaft aus gleichen Bauteilen bestehen.

Ein dritter, nicht gezeigter hydraulischer Anschluss dient auf der Stempelseite als weiterer Brühausgang für einen optionalen weiteren Kaffeestrang, der kein Cremaventil beinhaltet.

Das Siebelement 33 des Stempels ist häufig als ein Feinsieb ausgebildet, damit sehr feine Partikel nicht mit dem frisch gebrühten Kaffee ausgegeben werden.

Vorteilhaft werden sowohl der Stempel 10 als auch die Douchette 9 mit demselben Feinsieb als Siebelement 33 ausgestattet, um eine Durchdringung des Kaffeepulvers in die hydraulischen Zu- und Abwege zu vermeiden.

Fig. 7 und 8 zeigen schematische Schnittansichten gemäß Fig. 5 in verschiedenen Endstellungen der erfindungsgemäßen Brüheinheit 1.

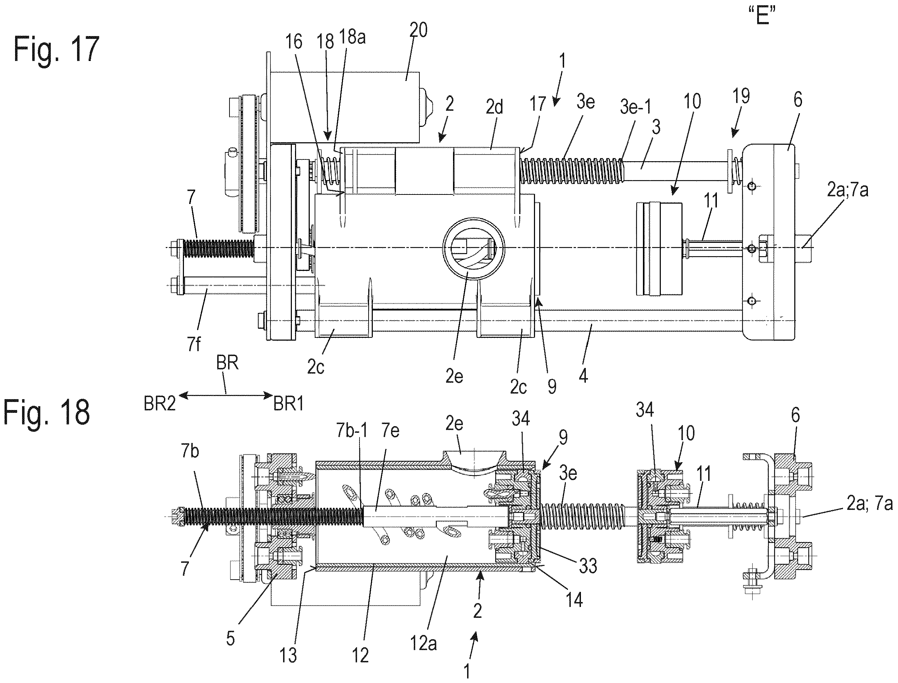

In der ersten Endstellung in Fig. 7 befindet sich der Brühschlitten 2 in einer "offenen Position" (siehe Fig. 9, 10) bzw. in einer "Satzabwurf-Position" (siehe Fig. 17, 18)

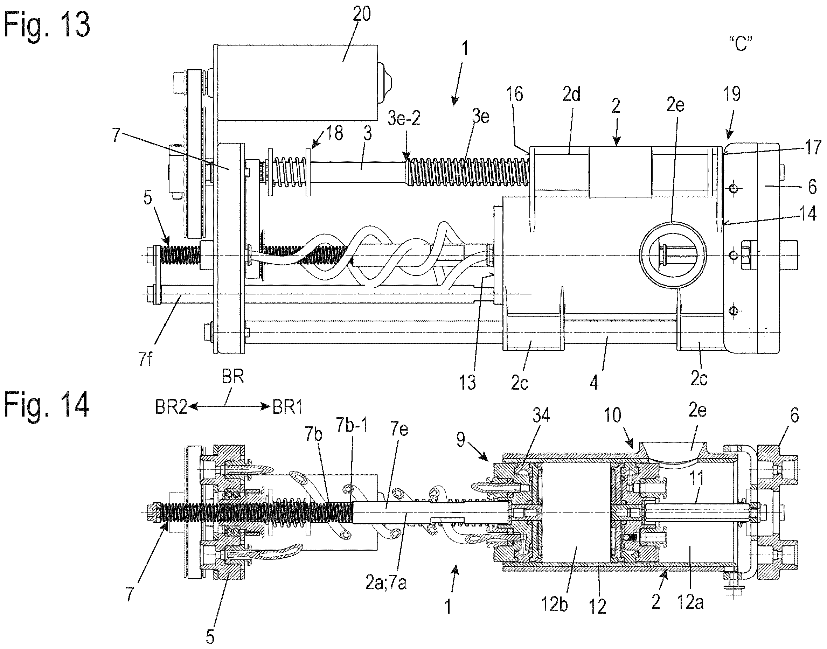

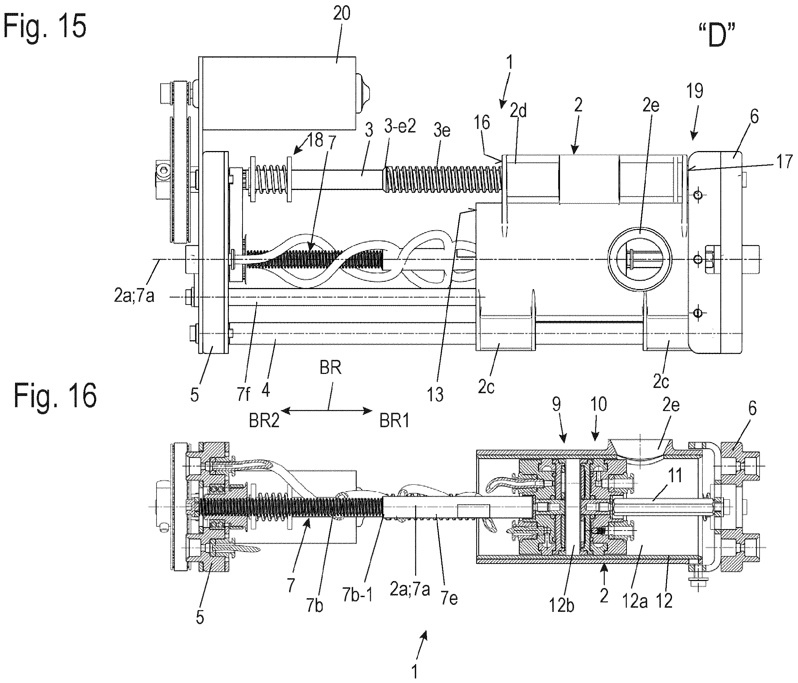

Die in Fig. 8 gezeigte zweite Endstellung wird von dem Brühschlitten 2 der Brüheinheit 1 in einer "Eintauch-Position" (siehe Fig. 13, 14) und auch in einer "geschlossenen Position" (siehe Fig. 15, 16) eingenommen.

Die Stellungen der Douchette 9 in Bezug auf den Stempel 10 in den Endstellungen werden unten noch näher beschrieben.

In den Endstellungen des Brühschlittens 2 kommt das Bewegungsgewinde 3e der Außenspindel 3 außer Eingriff mit der Außenspindelmutter 15 des Brühschlittens 2. Dies wird als "Ausspindeln" bezeichnet.

Damit der Brühschlitten 2 aus diesen Endstellungen wieder heraus bewegt werden kann, muss die Außenspindelmutter 15 des Brühschlittens 2 wieder mit dem Bewegungsgewinde 3e der Außenspindel 3 in Eingriff gebracht werden. Dieser Vorgang wird als "Wiedereinspindelung" bezeichnet.

Bei dem Vorgang "Wiedereinspindelung" wird der Brühschlitten 2 mit der Außenspindelmutter 15 in Richtung auf das sich mit der Außenspindel 3 drehende Bewegungsgewinde 3e so weit zubewegt, dass die Außenspindelmutter 15 mit dem Bewegungsgewinde 3e wieder in Eingriff kommt.

Die Brüheinheit 1 weist dazu mindestens eine Wiedereinspindelungseinrichtung auf. Zur Unterscheidung der Wiedereinspindelungseinrichtungen ist eine erste Wiedereinspindelungseinrichtung der ersten Endstellung der Brüheinheit 1 (siehe Fig. 7) vorgesehen, wobei eine zweite Wiedereinspindelungseinrichtung der zweiten Endstellung der Brüheinheit 1 (siehe Fig. 8) zugeordnet ist.

Wenn der Brühschlitten 2 wieder aus seiner jeweiligen Endstellung heraus bewegt werden soll, übt die jeweilige Wiedereinspindelungseinrichtung eine Kraft oder eine Art Bewegungsimpuls auf den Brühschlitten 2 derart aus, dass dieser sich in Richtung auf das Bewegungsgewinde 3e bewegt und die Außenspindelmutter 15 mit dem Bewegungsgewinde 3e in Eingriff kommt.

Eine solche Wiedereinspindelungseinrichtung kann unterschiedlich aufgebaut sein.

So umfassen die Wiedereinspindelungseinrichtungen in dem Ausführungsbeispiel, welches in den Figuren 1 bis 18 gezeigt ist, eine erste Anschlageinheit 18 und eine zweite Anschlageinheit 19 mit jeweils einem Kraftspeicherelement. Dies wird unten im Detail noch beschrieben.

Die Wiedereinspindelungseinrichtungen können auch Reibungselemente aufweisen, wie z.B. an der Douchette 9 oder an dem Stempel 10. Darauf wird weiter unten noch eingegangen.

Weiterhin können auch hydraulische Dichtelemente an der Douchette 9/ an dem Stempel 10 gezielt als Wiedereinspindelungseinrichtungen genutzt werden, was ebenfalls unten noch näher erläutert wird.

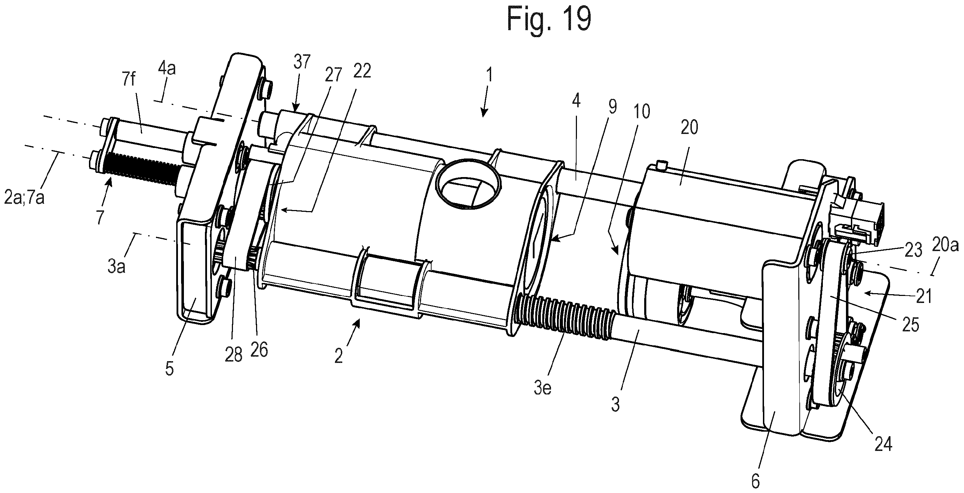

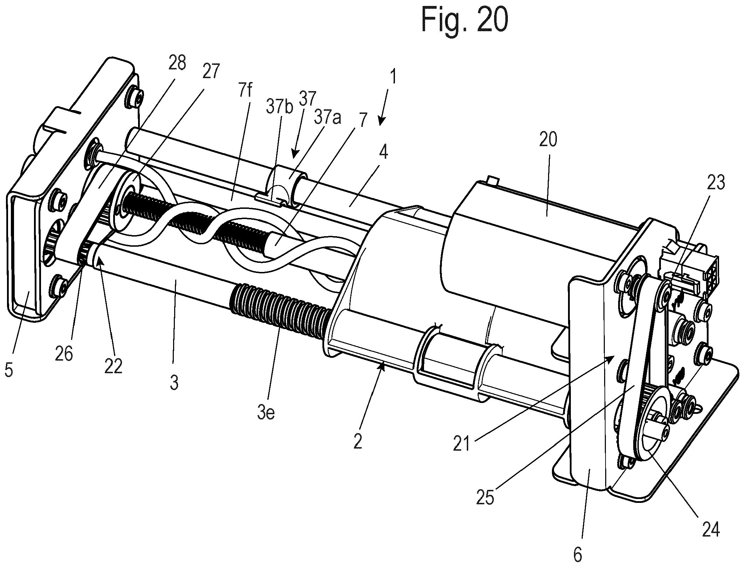

Eine weitere Möglichkeit der Realisierung der Wiedereinspindelungseinrichtungen kann durch einen Mitnehmer 37 erfolgen, der im Zusammenhang mit den Figuren 19 bis 30 noch ausführlich beschrieben wird.

Die Wiedereinspindelungseinrichtungen können auch Elektromagnete aufweisen, die unten erläutert werden.

Die Wiedereinspindelungseinrichtungen umfassen in dem Ausführungsbeispiel, welches in den Figuren 1 bis 18 gezeigt ist, die erste Anschlageinheit 18 und die zweite Anschlageinheit 19.

Auf der Außenspindel 3 ist in deren Abschnitten, die nahe an den Grundplatten 5, 6 liegen, jeweils eine Anschlageinheit 18, 19 angeordnet. Die Anschlageinheit 18 befindet sich an dem Abtriebsabschnitt 3d der Außenspindel 3 und ist der ersten Grundplatte 6 zugeordnet. Die Anschlageinheit 19 liegt an dem Lagerende 3c der Außenspindel 3 zugehörig zur zweiten Grundplatte 5.

Jede Anschlageinheit 18, 19 umfasst jeweils ein Anschlagelement 18a, 19a, eine Druckfeder 18b, 19b und eine Scheibe 18c, 19c. Die Druckfedern 18b, 19b sind jeweils zwischen der Scheibe 18c, 19c und dem Anschlagelement 18a, 19a, die hier auch als Scheiben ausgebildet sind, angeordnet und bilden jeweilige Kraftspeicherelemente. Die Scheibe 18c liegt axial fest an dem Abtriebsabschnitt 3d der Außenspindel 3 an. Die andere Scheibe 19c liegt an der zweiten Grundplatte 6 axial fest an. Die Druckfedern 18b, 19b und die Anschlagelemente 18a, 19a sind jeweils auf der Außenspindel 3 axial verschiebbar.

Sobald der Brühschlitten 2 in Bewegungsrichtung BR2 auf die erste Anschlageinheit 18 in Fig. 7 an der ersten Grundplatte 5 in die dazugehörige Endstellung zufährt und die erste Anschlageinheit 18 erreicht, kommt zunächst der Anschlagabschnitt 16 des Antriebsabschnitts 2d des Brühschlittens 2 in Kontakt mit dem Anschlagelement 18a der Anschlageinheit 18. Dann wird bei weiterer Bewegung die Druckfeder 18b gegen die ortsfeste Scheibe 18c vorgespannt und die Außenspindelmutter 15 aus dem Bewegungsgewinde 3e der Außenspindel 3 ausgespindelt.

Bei dem "Ausspindeln" kommen das Bewegungsgewinde 3e und die Außenspindelmutter 15 außer Eingriff, wobei dann ein Gewindeauslauf 3e-2 des Bewegungsgewindes 3e aus der Außenspindelmutter 15 herausbewegt ist.

In diesem Moment befindet sich der Brühschlitten 2 in Ruhestellung, d.h. die Geschwindigkeit des Brühschlittens 2 ist null, auch wenn sich die Außenspindel 3 weiter dreht ("Satzabwurf-Position"). Dieser Moment ist in Fig. 7 dargestellt. Dabei ist die Innenspindel 7 allerdings weiter in Bewegung, bis der Beginn des Spindelabschnitts 7e an einem Gewindeauslauf 7b-1 des Bewegungsgewindes 7b der Innenspindel 7 in Anschlag mit dem ortsfeste Abtriebsrad 27 kommt ("offene Position"). Dies wird im Zusammenhang mit Fig. 9, 10; 17, 18 noch weiter beschrieben.

Wenn nun die Bewegungsrichtung der Außenspindel 3 umgekehrt wird, sorgt die Federkraft der Druckfeder 18b für ein sofortiges Wiedereinspindeln des Brühschlittens 2, d.h. der Gewindeauslauf 3e-2 des Bewegungsgewindes 3e der Außenspindel 3 kommt wieder in Eingriff mit Außenspindelmutter 15.

In der zweiten in Fig. 8 gezeigten Endstellung erfolgen das Ausspindeln und Wiedereinspindeln von Bewegungsgewinde 3e der Außenspindel 3 und Außenspindelmutter 15 in ähnlicher Weise.

Sobald der Brühschlitten 2 in Bewegungsrichtung BR1 auf die zweite Endstellung in Fig. 8 an der zweiten Grundplatte 6 zufährt, kommt zunächst der Anschlagabschnitt 17 des Antriebsabschnitts 2d des Brühschlittens 2 in Kontakt mit dem Anschlagelement 19a der Anschlageinheit 19. Dann wird bei weiterer Bewegung die Druckfeder 19b gegen die ortsfeste Scheibe 19c vorgespannt und die Außenspindelmutter 15 aus dem Bewegungsgewinde 3e der Außenspindel 3 ausgespindelt.

Die das Bewegungsgewinde 3e kommt außer Eingriff mit der Außenspindelmutter 15, wobei ein Gewindeauslauf 3e-1 des Bewegungsgewindes 3e aus der Außenspindelmutter 15 herausbewegt ist.

Auch dann befindet sich der Brühschlitten 2 in Ruhestellung, d.h. die Geschwindigkeit des Brühschlittens 2 ist null, auch wenn sich die Außenspindel 3 weiter dreht ("Eintauch-Position"). Dabei dreht sich die Innenspindel 7 ebenfalls weiter, bis die Lasche an dem ersten Spindelende 7c der Innenspindel 7 in Anschlag mit der ortsfesten ersten Grundplatte 5 kommt ("geschlossene Position"). Dies wird im Zusammenhang mit Fig. 13 bis 16 noch weiter erläutert.

Wenn die Bewegungsrichtung der Außenspindel 3 wieder umgekehrt wird, sorgt die Federkraft der Druckfeder 19b für ein sofortiges Wiedereinspindeln des Brühschlittens 2, d.h. der Gewindeauslauf 3e-1 des Bewegungsgewindes 3e der Außenspindel 3 kommt wieder in Eingriff mit Außenspindelmutter 15.

Zur Reduzierung der Reibungsgeräusche und des Verschleißverhalten der Außenspindelmutter beim Überrasten während des "Ausspindelns" in der jeweiligen Endstellung des Brühschlittens 2 kann ein zusätzliches Reibelement (z.B. O- Ring) eingesetzt werden, dass zwischen Douchette 9 und der Innenwand des Innenraums 12a des Brühzylinders 12 wirkt. Da die Douchette 9 niemals den Innenraum 12a des Brühzylinders 12 verlässt und beide Bauteile immer synchron in dieselbe Bewegungsrichtung BR angetrieben werden, vermindert dieses zusätzliche Reibelement als Dämpfelement die Anpresskraft der Außenspindelmutter 15 auf das Bewegungsgewinde 3e der Außenspindel 3 durch die jeweilige Druckfeder 18b, 19b. Erst bei Drehrichtungsumkehr kann die jeweilige Druckfeder 18b, 19b ihre volle Wirkung zur Wiedereinspindelung entfalten. Nachteil dieses zusätzlichen Reibelementes sind zusätzliche Reibungsverluste beim Anfahren der unterschiedlichen Stellungen/Positionen und Stick- Slip- Effekte bei trockener und mit Kaffeemehlresten benetzte Brühzylinder 12.

Zur Wiedereinspindelung können auch Reibungselemente an der beweglichen Innenspindel 7 in Zusammenwirkung mit dem Brühschlitten 2, d.h. mit dessen Brühraum 12b, sinnvoll sein, insbesondere an der Douchette 9 (oder an dem Stempel 10, wenn dieser anstelle der Douchette 9 beweglich ist und die Douchette 9 ortsfest ist). Durch die durch das Reibungselement vorhandenen Reibkraft zwischen Douchette 9 und Brühraum 12 bzw. Brühschlitten 2 wird die Außenspindelmutter 15 des Brühschlittens 2 zur Wiedereinspindelung wieder in das dazugehörige Außengewinde (Bewegungsgewinde 3e) der Außenspindel 3 in Eingriff gedrückt, sobald eine Bewegungsumkehr an der Innenspindel 7 erfolgt. In dieser Konstellation umfasst die erste Wiedereinspindelungseinrichtung mindestens ein solches Reibelement, z.B. in Form eines O-Rings.

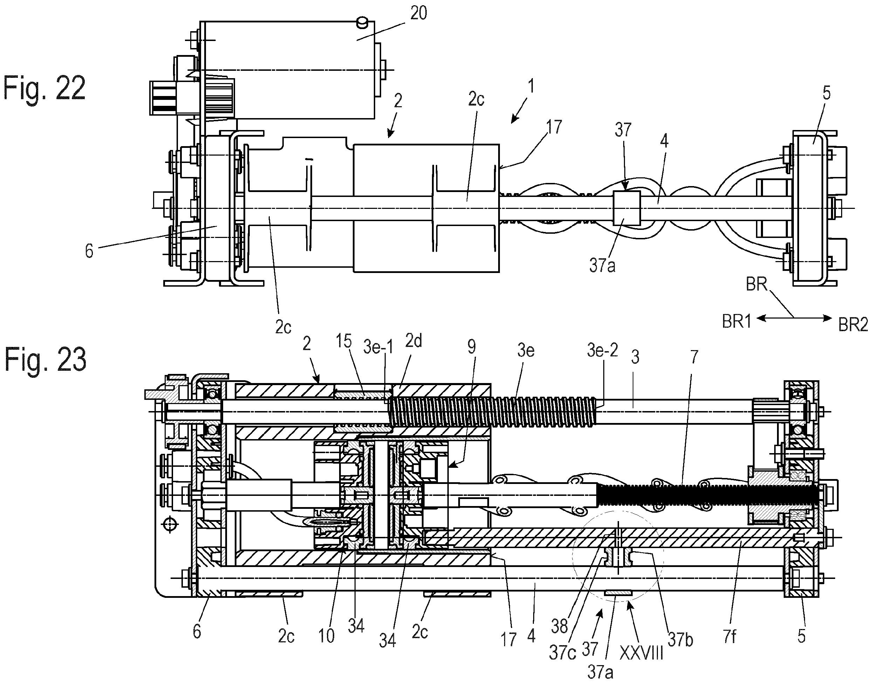

Ein solches Reibungselement kann auch als ein hydraulisches Dichtelement gebildet sein. Dazu bietet sich die schon vorhandene Dichtung 34 an. Diese Dichtungen 34 an Stempel 10/Douchette 9 können gezielt für diese Funktion genutzt werden. Durch eine zeitverzögerte Entlastung der Dichtungen 34 nach Richtungsumkehr der Innenspindel 7 wird eine hohe Reibkraft auf den Brühschlitten 2 übertragen und dieser kurzzeitig mit der axialen Bewegung der Innenspindel 7 (z.B. in Bewegungsrichtung BR2 in Fig. 23) synchronisiert. So ergibt sich ein Bewegungsimpuls auf den Brühschlitten 2 als Wiedereinspindelung. Vorteilhaft wirkt sich dabei aus, dass im übrigen Bewegungsverlauf nach Dichtungsentlastung die erhöhte Reibung nicht mehr vorhanden ist. Das vermeidet zusätzlichen Verschleiß der beweglichen Bauteile.

Die Beaufschlagung der Dichtungen 34 mit einem geeigneten Wasserdruck kann gemeinsam oder auch separat über gesteuerte Ventile, z.B. Magnetventile erfolgen. Eine nicht gezeigte Steuereinrichtung der Brüheinheit 1 kann eine passende Steuerung der Magnetventile und somit der Dichtungen 34 vornehmen.

Eine weitere Möglichkeit zur Vermeidung des geschilderten Überrastens der Außenspindelmutter 15 ist das Festhalten des Brühschlittens 2 in einem jeweiligen Endanschlag durch einen jeweiligen Elektromagneten, der zum Festhalten des Brühschlittens 2 eingeschaltet wird. Vorteilhaft kann dann die Innenspindel 7 unabhängig von der Außenspindel 3 auch bei Drehrichtungsumkehr bewegt werden. Der Brühschlitten 2 kann zu einem definierten Positionspunkt der Innenspindel 7 wieder gelöst werden, wenn der jeweilige Elektromagnet ausgeschaltet wird. Derartige Elektromagneten sind nicht dargestellt, aber mit der folgenden Beschreibung im Zusammenhang mit Fig. 7 und 8 leicht vorstellbar.

Ein solcher Elektromagnet kann für die in Fig. 7 gezeigte Endstellung zwischen einer Innenseite der ersten Grundplatte 5 und der Stirnseite 13 des Brühschlittens 2 angeordnet und an der ersten Grundplatte 5 befestigt sein. In ähnlicher Weise gilt dies für den Elektromagneten für die in Fig. 8 gezeigte Endstellung. Hierbei ist der Elektromagnet zwischen einer Innenseite der zweiten Grundplatte 6 und der anderen Stirnseite 14 des Brühschlittens 2 angeordnet und an der zweiten Grundplatte 6 befestigt.

Es ist auch denkbar, dass pro Endstellung zwei oder mehrere Elektromagneten vorgesehen sind. Auch ringförmige Elektromagneten, deren Durchmessen dem der jeweiligen Stirnseite 13, 14 des Brühschlittens 2 entsprechen, könnten zum Einsatz kommen.

Weiterhin ist es auch denkbar, dass der jeweilige Elektromagnet eine mechanische Verriegelung des Brühschlittens 2, z.B. mit der jeweiligen Grundplatte 5, 6 in der jeweiligen Endstellung betätigt. Eine solche mechanische Verriegelung des Brühschlittens 2 kann derart ausgestaltet sein, dass diese beim Lösen durch den Elektromagnet, der den Verriegelungsvorgang ausgelöst hat, so bewegt wird, dass die mechanische Verriegelung, z.B. durch einen Hebel oder einen beweglichen Nocken, einen Bewegungsimpuls auf den Brühschlitten 2 zur Wiedereinspindelung ausführt. Dies kann z.B. durch eine beim Verriegeln gespannte Feder oder/und durch einen weiteren Elektromagnet erfolgen. Hierbei weist/weisen die Wiedereinspindelungseinrichtungen den/die Elektromagnet/en und die Verriegelungsvorrichtung auf.

Eine weitere Ausführung der Wiedereinspindelungseinrichtungen weist mindestens zwei Elektromagneten pro Endstellung des Brühschlittens 2 auf. Hierbei ist einer der beiden Elektromagneten ortsfest, z.B. an der Grundplatte 5, 6 angebracht. Der andere der beiden Elektromagneten ist jeweils dem einen ortsfesten Elektromagneten gegenüber liegend an dem Brühschlitten 2 befestigt. Für die elektrische Versorgung der Elektromagneten ist eine Gleichspannung vorgesehen, die zur Beaufschlagung eines der beiden Elektromagneten z.B. über einen Relaiswechselkontakt oder Halbleiterschalter umpolbar ist. Dazu sind die beiden sich gegenüberstehenden Elektromagneten beim Einnehmen der Endstellung des Brühschlittens 2 durch ihre Bestromung so geschaltet, dass sich ungleichnamige Pole zur Anziehung gegenüber stehen. Zur Wiedereinspindelung wird die Polung eines der beiden Elektromagneten so umgepolt, dass sich gleichnamige Pole der beiden Elektromagneten gegenüberstehen und abstoßen, wodurch der Bewegungsimpuls auf den Brühschlitten 2 zur Wiedereinspindelung ausgeübt wird. Während des Verstellbetriebs des Brühschlittens 2 außerhalb der Endstellungen kann die Stromversorgung der Elektromagnete zur Energieeinsparung ausgeschaltet sein.

Es ist auch denkbar, dass ein Elektromagnet mit einem beweglichen, z.B. längsverschiebbaren oder/und drehbaren/verschwenkbaren Kern an der Grundplatte 5, 6 befestigt ist. Beim Einnehmen der Endstellung wird der Elektromagnet eingeschaltet, der Kern gegen eine Federkraft eingezogen und der Brühschlitten 2 durch die eingeschaltete Kraft des Elektromagneten in der Endstellung festgehalten. Für den Wiedereinspindelungsvorgang wird der Elektromagnet ausgeschaltet und die Kraft der gespannten Feder drückt auf den beweglichen Kern, welcher seinerseits den Bewegungsimpuls auf den Brühschlitten 2 zur Wiedereinspindelung ausübt. In diesem Fall umfassen die Wiedereinspindelungseinrichtungen den/die Elektromagnet/en mit dem beweglichen Kern.

Durch die beiden Zahnriemenräder (Antriebsrad 26, Abtriebsrad 27) des zweiten Getriebes 22 (siehe Fig. 4, 5) kann die Übersetzung des zweiten Getriebes 22 zwischen der Außenspindel 3 und der Innenspindel 7 weiter angepasst werden. Wenn der Durchmesser des Abtriebsrades 27 kleiner ist als ein Durchmesser des Antriebsrades 26, wird bei einem Verpressen von Kaffeepulver zwischen Douchette 9 und Stempel 10 in dem Brühraum 12b (dies wird unten noch weiter beschrieben) an der Innenspindel 7 kraftvoller übersetzt, sodass ein getriebeloser Antriebsmotor 20 in der Lage ist, die geforderten Presskräfte zwischen Douchette 9 und Stempel 10 umzusetzen. Das vergleichbar geringe Drehmoment zur Bewegung der Außenspindel 3 reicht auch für die Positionierung des Brühschlittens 2 aus. An dieser Stelle ist eine größere Geschwindigkeit erforderlich.

Es ist u.U. vorteilhaft, wenn zwischen dem Antriebsmotor 20 und der Außenspindel 3 das erste Getriebe 21 als ein Untersetzungsgetriebe angeordnet ist. Dieses erste Getriebe 21 weist in dem gezeigten Ausführungsbeispiel (z.B. Fig. 5) eine Getriebestufe auf. Es können natürlich auch zwei oder mehrere Getriebestufen möglich sein. Auf diese Weise sind sehr viele Übersetzungsverhältnisse durch passende Auswahl der Spindelsteigungen des Bewegungsgewindes 3e der Außenspindel 3 und des Bewegungsgewindes 7b der Innenspindel 7, sowie auch der Übersetzungen der Getriebe 21, 22 konstruktiv möglich. Die Auswahl eines Antriebsmotors 20 für die Brüheinheit 1 ist dadurch sehr flexibel. Mit einem vergleichsweise leistungsreduzierten Antriebsmotor 20 sind sowohl hohe Verfahrgeschwindigkeiten als auch in einer großen Spannweite einstellbare Anpresskräfte zwischen Douchette 9 und Stempel 10 realisierbar.

Die in dem Dokument EP 2 907 427 A1 beschriebene Ausführung beschreibt einen nicht-linearen Getriebeabschnitt, bei welchem der Kompromiss zwischen hohen Presskräften und gleichzeitig kurzen Verfahrzyklen erreicht wird. Zum Anfahren der verschiedenen Positionen werden die Funktionselemente mit großen Steigungen verfahren. Beim Verdichten des Kaffeepulvers wird der Antriebsmotor mit deutlich kleinerer Steigung untersetzt, um mit derselben Führung große Kräfte zu übertragen. Der entscheidende Unterschied zu der hier dargestellten erfindungsgemäßen Brüheinheit 1 besteht darin, dass sich die Übersetzung zwischen Antriebsmotor 20 und den Funktionsgruppen der Brüheinheit 1 nicht- linear verändert. Sämtliche Übersetzungen beim dem erfindungsgemäßen Doppelspindelprinzip mit der Außenspindel 3 und Innenspindel 7 sind konstant, d.h. die Bewegungsgewinde 3e, 7b der Spindeln 3, 7 weisen gleich bleibende Steigungen auf, und die Getriebeübersetzungen der Getriebe 21, 22 (ggf. auch Zahnräder) sind gleich bleibend. Durch das oben beschriebene Ausspindeln des Brühschlittens 2 wird der Stillstand des Brühschlittens 2 und somit des Brühzylinders 12 realisiert, sodass in diesem Fall kein Übersetzungsvorgang stattfindet.

Fig. 9 bis 18 zeigen schematische Ansichten der erfindungsgemäßen Brüheinheit 1 in verschiedenen Positionen. Dabei sind in den Figuren 9, 11, 13, 15, 17 jeweils Draufsichten der Brüheinheit 1 dargestellt, in denen die Stellungen des Brühschlittens 2 deutlich gezeigt sind. Die Figuren 10, 12, 14, 16, 18 sind jeweils darunter angeordnet und zeigen jeweils eine horizontale Schnittdarstellung dazu. In diesen Schnittdarstellungen sind die Stellungen von Brühschlitten 2, Douchette 9 und Stempel 10 untereinander zu erkennen.

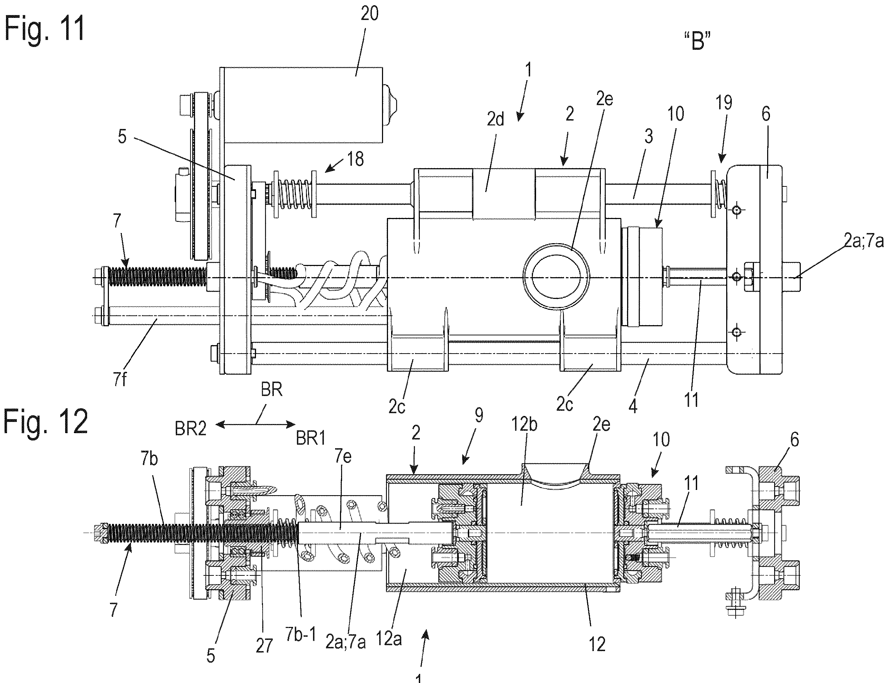

Fig. 9 und 10 stellen eine "offene Position" dar. In Fig. 11 und 12 ist eine "Füll-Position" gezeigt. Eine "Eintauch-Position" zeigen Fig. 13 und 14. Fig. 15 und 16 zeigen eine "geschlossene Position", und Fig. 17, 18 stellen eine "Satzabwurf-Position" dar.

Diese verschiedenen Positionen der Brüheinheit 1 charakterisieren die Gesamtfunktionalität der Brüheinheit 1. Der "offenen Position" (Fig. 9, 10) kommt eine besondere Bedeutung zu, denn die Steuerung der Brüheinheit 1 kann die Brühfunktionselemente hier eindeutig zueinander referenzieren. Hier gelangt die Innenspindel 7 an ihren Endanschlag am Gewindeauslauf 7b-1 an dem Spindelabschnitt 7e in der dazugehörigen Innenspindelmutter 27a. Dabei ist der Brühschlitten 2 auf der Kolbenantriebsseite ausgespindelt, d.h. der Gewindeauslauf 3e-2 des Bewegungsgewindes 3e der Außenspindel 3 ist außer Eingriff mit der Außenspindelmutter 15 geraten und der Antriebsabschnitt 2d des Brühschlittens 2 steht mit seinem Anschlagabschnitt 16 in Kontakt mit dem Anschlagelement 18a der ersten Anschlageinheit 18. Dies ist oben im Zusammenhang mit Fig. 7 bereits ausführlich beschrieben. Unter der Kolbenantriebsseite ist hier die Seite der Brüheinheit 1 mit den Getrieben 21, 22 zu verstehen.

Die Douchette 9 verschließt in der "offenen Position" die Einfüllöffnung 2e in dem Brühschlitten 2. Der Stempel 10 steht frei an seinem durch den Stempelhalter 11 fixierten Platz.

Von dieser Ausgangsposition kann über einen bestimmten Drehwinkel der Außenspindel 3 die "Füll-Position" (Fig. 11, 12) immer wieder positionsgenau angefahren werden. Dabei liegt der Brühschlitten 2 in etwa mittig zwischen den beiden Grundplatten 5, 6. Der Brühschlitten 2 ist mit der Öffnung des Brühzylinders 12 über den Rand der Druckseite des Stempels 10 gefahren, welche so einen beginnenden Verschluss des Brühraums 12b bildet. Die Douchette 9 ist gleichzeitig weiter in der Bewegungsrichtung BR1 auf den Stempel 10 bewegt. Der Brühraum 12b ist nun durch die Einfüllöffnung 2e durch einzufüllendes Kaffeepulver erreichbar.

In der darauf folgenden "Eintauch-Position" (Fig. 13, 14) ist der Brühschlitten 2 bereits auf der Antriebsgegenseite ausgespindelt, wie ausführlich schon im Zusammenhang mit Fig. 8 oben beschrieben wurde. Die Douchette 9 ist dabei so weit in den Brühzylinder 12 eingefahren, dass ihre Dichtung 34 und die Dichtung 34 des Stempels 10 beide innerhalb des Brühzylinders 12 liegen und den geschlossenen Brühraum 12b abdichten. Falls es sich bei den Dichtungen 34 nicht um einfache O- Ringe handelt, können sie nun mit Wasserdruck beaufschlagt werden, um die Dichtfunktion zu aktivieren. Der Abstand zwischen Stempel 10 und Douchette 9 begrenzt in dieser Stellung mit dem entsprechend gebildeten Brühraum 12b die maximal mögliche Kaffeepulvereinwaage für leicht zusammengeschobenes trockenes Pulver ohne größere Verdichtung. Für größere Einwaagen von mehr als beispielsweise 15g gibt es die Möglichkeit, die "Eintauch-Position" mit einer Kaffeemehlteilmenge anzufahren und danach in der "Füll-Position" ein zweites Mal einzumahlen, bevor die Kaffeeextraktion beginnt.

Während der Extraktion des Kaffeemehls erhöht sich die Dichte des Tresters, und dieser kann nach Beendigung des Brühvorgangs mit der maximal möglichen Kolbenkraft der Douchette 9 ausgepresst werden. Die maximale Auspressstellung ("Satzabwurf-Position" - Fig. 17, 18) wird dabei immer erreicht, denn bei der Richtungsumkehr des Antriebs bzw. der Außenspindel 3 überholt der Brühschlitten 2 die Douchette 9 und es kommt zum definierten Satzabwurf. Eine Überfüllung der Brüheinheit 1 wird damit vermieden. Aus der Geschwindigkeitsdifferenz zwischen Brühschlitten 2 und Stempel 10/Douchette 9 sowie aufgrund von Scherkräften, die auf den Kaffeekuchen wirken, resultiert eine definierte Abwurfposition in der "Satzabwurf-Position".

In der "Satzabwurf-Position" ist der Brühschlitten 2 in der Endstellung an der ersten Grundplatte 5, wobei die Douchette 9 noch in dem Brühzylinder 12 steht, jedoch mit dem Siebelement 33 und einem Teil des zweiten Schalenelementes 32 aus dem Brühzylinder 12 leicht hervorsteht. Dabei fällt der Kaffeekuchen (Trester) leicht von dem Siebelement 33 der Douchette 9 ab und kann in einem nicht gezeigten Behältnis der nicht gezeigten Kaffeemaschine aufgefangen werden. Dieser Tresterbehälter ist z.B. in einem Bereich unterhalb des Zwischenraums zwischen dem Stempel 10 und der Stirnseite 14 des Brühschlittens 2 angeordnet. Dies ist im Zusammenhang mit Fig. 17, 18 leicht verständlich. Diese "Satzabwurf-Position" bildet auch gleichzeitig eine "Durchmahl-Position" von Kaffeepulver direkt in den Tresterbehälter.

Schließlich ergibt sich noch die "geschlossene Position" (Fig. 15, 16), wobei Stempel 10 und Douchette 9 maximal zusammengefahren sind, sofern kein Kaffeepulver eingemahlen worden ist.

Vorteilhaft wird die Steigung der Innenspindel 7 so gewählt, dass diese während des Brühprozesses selbsthemmend wirkt. Dadurch wird eine Rückwärtsbewegung der Douchette 9 (bzw. des Stempels 10, je nach Konstruktion) durch den Brühdruck vermieden, sodass eine spezielle Bestromung des Antriebsmotors 20 (Gegenhalten) während dieses Prozesses nicht notwendig ist. Folglich hat der Antriebsmotor 10 weniger Energieverluste.

Eine Referenzierung der Positionen von Brühschlitten 2, Douchette 9 bzw. Stempel 10 (je nach Anordnung) kann in dem Fall, dass der Antriebsmotor ein Schrittmotor ist, durch dessen Schrittzahl bzw. Verdrehwinkel mittels der zugehörigen Steuerung erfolgen. Es ist auch möglich, dass die verschiedenen Positionen durch elektromechanische Endschalter, Annäherungsschalter, Lichtschranken oder Hall-Sensoren (auch zusätzlich) definiert werden. Eine weitere Möglichkeit bilden Drehwinkelgeber unterschiedlicher Ausführungen, die z.B. mit der Außenspindel 3 und/oder der Innenspindel 7 drehfest verbunden sind.

In Fig. 19-20 sind schematische Perspektivansichten einer Variation des Ausführungsbeispiels nach Fig. 1 mit einer Mitnehmereinrichtung als Bestandteil der ersten Wiedereinspindelungseinrichtung dargestellt.

Die Variante der Brüheinheit 1 ist in Fig. 19-20 in der zweiten Endstellung gezeigt.

Im Gegensatz zu dem Ausführungsbeispiel nach Fig. 1 ist der Antriebsmotor 20 an der zweiten Grundplatte 6 zusammen mit dem ersten Getriebe 21 angeordnet, wobei das zweite Getriebe 22 an der ersten Grundplatte 5 verblieben ist. Der Antriebsmotor 20 befindet sich mittig oberhalb von Außenspindel 3 und Führungsstange 4.

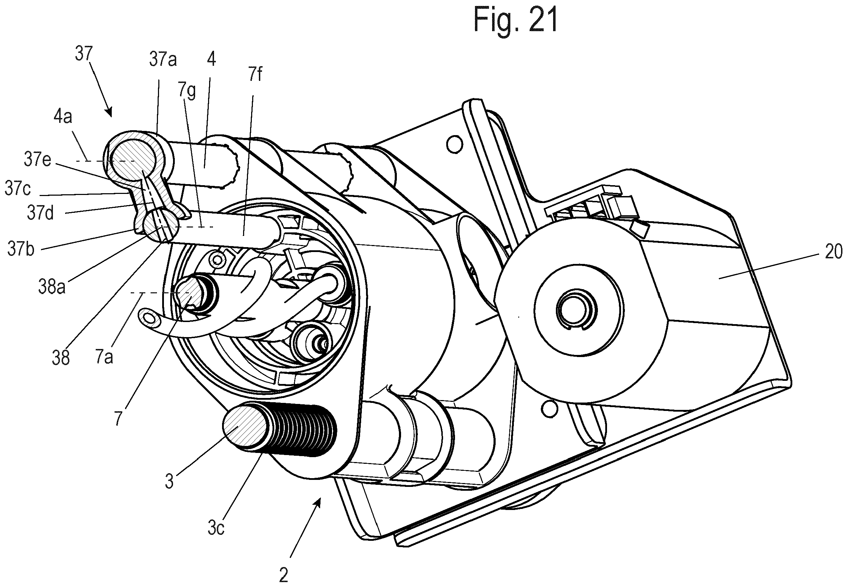

Die erste Wiedereinspindelungseinrichtung ist hier mit einer Mitnehmereinrichtung versehen. Die Mitnehmereinrichtung ist in Fig. 21 in einer eine schematische Schnittansicht nach Figur 19-20 dargestellt.

Die Mitnehmereinrichtung umfasst einen Mitnehmer 37 mit einem ersten Halteelement und ein zu dem ersten Halteelement korrespondierendes zweites Halteelement.

Der Mitnehmer 37 ist auf der Seite der beweglichen Innenspindel 7 als ein Reibelement auf der mitgeführten Sicherungsstange 7f (Verdrehsicherung) und auf der Führungsstange 4 verschiebbar angeordnet. Mittels des Mitnehmers 37 wird auf den Brühschlitten 2 der notwendige Bewegungsimpuls zum Wiedereinspindeln von Außenspindelmutter 15 und Bewegungsgewinde 3e der Außenspindel 3 ausgeübt. Dies wird unten weiter noch beschrieben. Der Mitnehmer 37 kann in den anderen Stellungen des Brühschlittens 2 verschoben werden, ohne den Brühschlitten 2 zu blockieren.

Der Mitnehmer 37 umfasst einen ringförmigen Halteabschnitt 37a und einen im Schnitt etwa halbkreisförmigen Führungsabschnitt 37b, welcher hier zwei viertelkreisförmige Elemente aufweist, die jeweils über eine Verbindung 37c mit dem Halteabschnitt 37a verbunden sind.

In dem gezeigten Beispiel ist in einer Tasche 37e innerhalb der Verbindung 37c im Mitnehmer 37 ein Permanentmagnet, z.B. in Form eines Stabmagneten, als erstes Halteelement eingebracht. Der Stabmagnet ist hier durch eine Achse 37d symbolisch angegeben.

Ein entgegengesetzt gepolter Permanentmagnet, z.B. auch als ein Stabmagnet ausgebildet, ist als zweites Halteelement in einer Aufnahme 38 in der Sicherungsstange 7f angeordnet. Dieser Magnet ist symbolisch durch eine Achse 38a angedeutet.

Der Mitnehmer 37 ist mit seinem ringförmigen Halteabschnitt 37a auf der Führungsstange 4 aufgeschoben und auf dieser in deren Längsrichtung (Führungsachse 4a) mit einem bestimmten Reibwiderstand versschiebbar geführt angeordnet. Dabei steht der Führungsabschnitt 37b mit der Sicherungsstange 7f in Kontakt. Die zwei viertelkreisförmigen Elemente des Führungsabschnitts 37b sind dabei an der Seite der Sicherungsstange 7f, welche zu der Führungsstange 4 weist, auch mit einem bestimmten Reibungswiderstand verschiebbar geführt.

In einer Ruheposition des Mitnehmers 37, die in Fig. 21 in einem Schnitt dargestellt ist, fluchten die Achse 37e des Stabmagneten in dem Mitnehmer 37 und die Achse 38a des Magneten in der Aufnahme 38 in der Sicherungsstange 7f. In dieser Ruheposition ist der Reibwiderstand bzw. eine Haltekraft zwischen dem Mitnehmer 37 und der Sicherungsstange 7f durch die Anziehungskraft der Magneten erhöht, d.h. größer als außerhalb der Ruheposition. Dabei wird der Mitnehmer 37 durch die Magnetkraft der beiden sich gegenseitig anziehenden Magneten in dieser Ruheposition gehalten. Der Begriff Ruheposition bedeutet hier, dass der Mitnehmer 37 in Bezug auf die Sicherungsstange 7f keine relative Bewegung ausführt und seine Position gegenüber der Sicherungsstange 7f nicht verändert. Wenn sich die Sicherungsstange 7f bei einer Verstellung axial bewegt, wird aufgrund der beiden sich gegenseitig anziehenden Magnete der Mitnehmer 37 weiterhin in der Ruheposition gehalten und mit Sicherungsstange 7f mitbewegt. Dabei gleitet der Führungsabschnitt 37b auf der Führungsstange 4 und wird auf dieser so verschiebbar geführt.

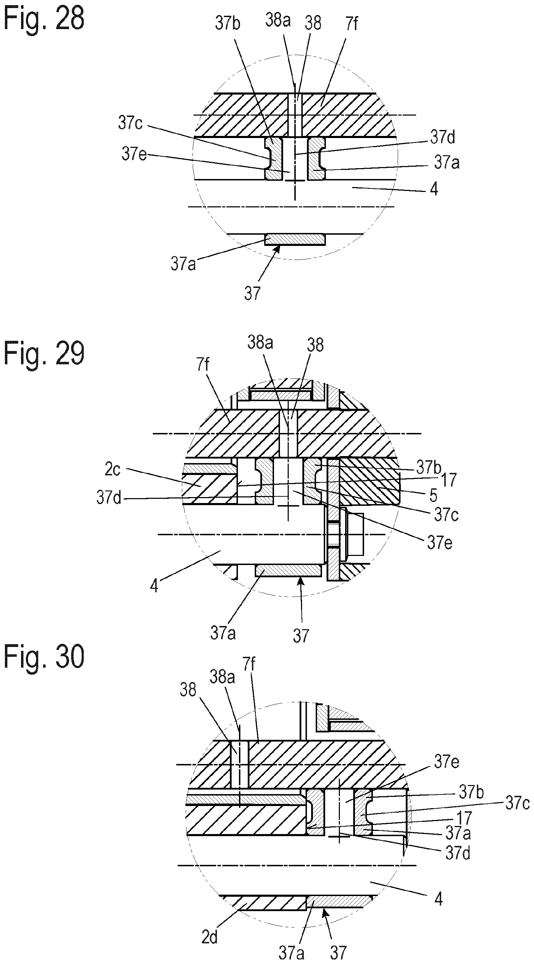

In den Figuren 22-27 sind schematische Ansichten der Variation nach Figur 19-20 in verschiedenen Positionen gezeigt. Fig. 28-30 stellen dazu vergrößerte schematische Schnittansichten der Mitnehmereinrichtung (Kreismarkierungen) in den verschiedenen Positionen nach Fig. 22-27 dar.

Fig. 22, 24, 26 zeigen jeweils eine Seitenansicht der Brüheinheit 1 in unterschiedlichen Stellungen, wobei Fig. 23, 25, 27 dazu jeweils eine Längsschnittansicht der Brüheinheit 1 in einer gemeinsamen Ebene von Außenspindel 3, Führungsstange 4, Innenspindel 7 und Sicherungsstange 7f darstellen.

Es ist jeweils nur die erste Wiedereinspindelungseinrichtung mit der Mitnehmereinrichtung dargestellt. Die zweite Wiedereinspindelungseinrichtung kann hier beispielsweise durch die Dichtung 34 der Douchette 9 (wie oben schon beschrieben) erfolgen. Natürlich sind auch andere Ausführungen wie oben beschrieben, auch in Kombinationen, möglich.

Die Stellung der Variante der Brüheinheit 1 in Fig. 22 und 23 entspricht der in Fig. 8 gezeigten zweiten Endstellung der Brüheinheit 1. Die Außenspindelmutter 15 und das Bewegungsgewinde 3e sind ausgespindelt. Der Mitnehmer 37 der Mitnehmereinrichtung der ersten Wiedereinspindelungseinrichtung befindet sich in Ruheposition, die Achsen 37e und 38a fluchten. Dies ist in Fig. 28 vergrößert dargestellt. Eine Wiedereinspindelung kann durch die nicht gezeigte zweite Wiedereinspindelungseinrichtung erfolgen.

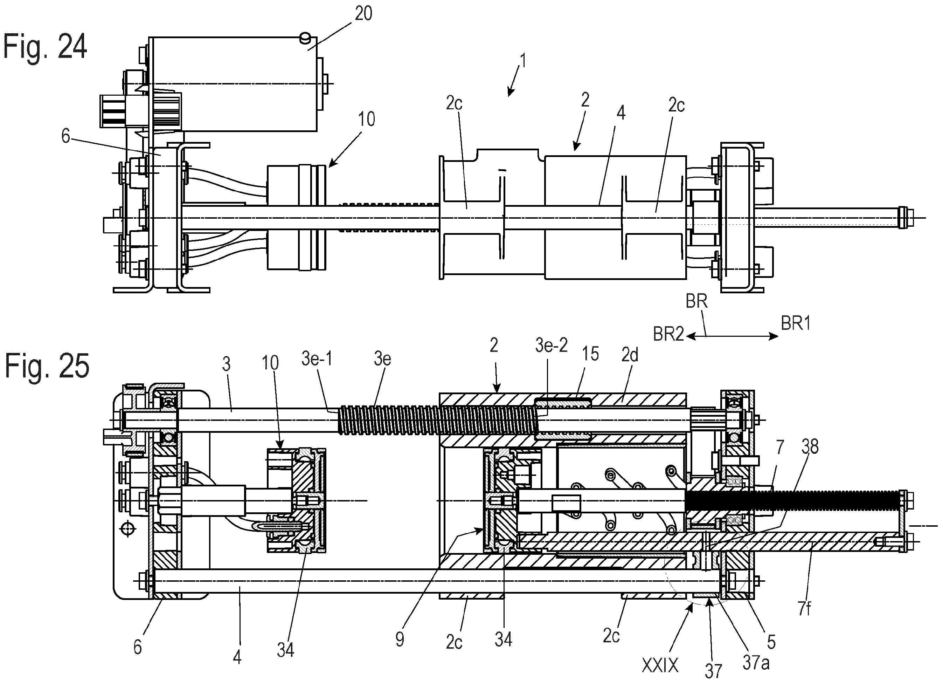

In Fig. 24 und 25 ist die erste Endstellung (siehe Fig. 7) der Variante der Brüheinheit 1 gezeigt. Die Außenspindelmutter 15 und das Bewegungsgewinde 3e sind ausgespindelt. Der Mitnehmer 37 der Mitnehmereinrichtung der ersten Wiedereinspindelungseinrichtung befindet sich zunächst in Ruheposition, die Achsen 37e und 38a fluchten (siehe vergrößerter Darstellung in Fig. 29). Der Mitnehmer 37 befindet sich dicht an der ersten Grundplatte 5, kontaktiert diese jedoch nicht.

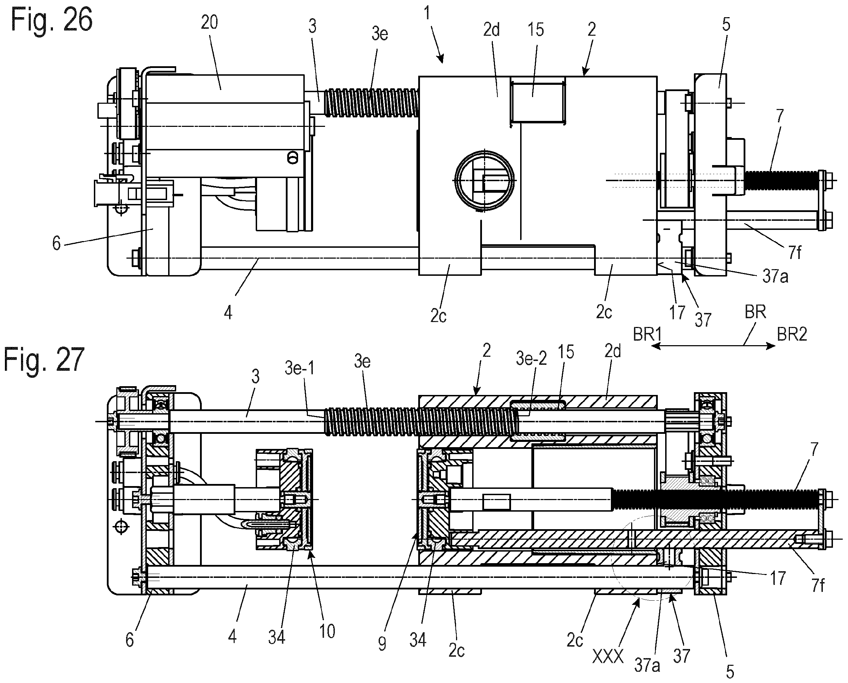

Sobald nun die Douchette 9 in die Bewegungsrichtung BR2 in Richtung auf die entgegengesetzte zweite Grundplatte 6 bewegt wird, werden die Innenspindel 7 und die damit gekoppelte Sicherungsstange 7f in Bewegungsrichtung BR2 verstellt. Da die Außenspindelmutter 15 und das Bewegungsgewinde 3e noch ausgespindelt sind, verbleibt der Brühschlitten 2 in der ersten Endstellung. Der auf der Sicherungsstange 7f befindliche Mitnehmer 37 wird dabei von der Sicherungsstange 7f aufgrund der magnetischen Haftung mitgenommen und gegen den Anschlagabschnitt 17 des Brühschlittens 2 gedrückt. Solange bleibt der Mitnehmer 37 in seiner Ruheposition aufgrund der magnetischen Haftung. Bei weiterer Bewegung der Sicherungsstange 7f wird die magnetische Haftung des nun am noch unbeweglichen Brühschlitten 2 anliegenden Mitnehmers 37 überwunden. Die Sicherungsstange 7f gleitet dann in dem Halteabschnitt 37a des nun festgehaltenen Mitnehmers 37 weiter. In diesem Augenblick übt der Mitnehmer 37 einen Bewegungsimpuls auf den Brühschlitten 2 aus, wodurch die Wiedereinspindelung von Außenspindelmutter 15 und Bewegungsgewinde 3e erfolgen kann. Dies ist in den Figuren 26 und 27 zu sehen.

Fig. 30 zeigt dazu die Situation der Mitnehmereinrichtung. Die Achsen 37e und 38a fluchten nicht mehr. Der Mitnehmer 37 steht über Stirnseiten von Führungsabschnitt 37a und Halteabschnitt 37b mit dem Anschlagabschnitt 17 des Brühschlittens 2 in Kontakt.

Anstelle der magnetischen Haftung in der Ruheposition des Mitnehmers 37 auf der Sicherungsstange 7f kann auch eine andere Reibungshaftung beispielsweise durch ein mit Federkraft beaufschlagtes Kugeldruckelement realisiert sein. Das Kugeldruckelement steht dann in der Ruheposition des Mitnehmers 37 mit einer korrespondierenden Einformung oder Nut anstelle der Aufnahme 38 in der Sicherungsstange 7f in Kontakt. Die Haftungskraft dieser Verbindung ist groß genug für den Bewegungsimpuls zur Wiedereinspindelung der Außenspindelmutter 15 und des Bewegungsgewindes 3e, aber klein genug, um ein Verklemmen der Brüheinheit 1 zu vermeiden.

Die Wiedereinspindelungseinrichtung/en kann/können einseitig oder beidseitig angeordnet sein. Dabei können die Wiedereinspindelungseinrichtungen die oben beschriebenen Funktionseinheiten, auch in verschiedenen Kombinationen aufweisen.

Die Erfindung ist durch das oben angegebene Ausführungsbeispiel nicht eingeschränkt, sondern im Rahmen der Ansprüche modifizierbar.

Denkbar ist es, dass die Bewegungsfunktionalität von Douchette 9 und Stempel 10 in der Brüheinheit 1 auch miteinander getauscht werden können, d.h. seitenverkehrt angeordnet sein können.

An dieser Stelle sei auf Konstruktionen verwiesen, die bei der Anmelderin unter der Bezeichnung "Deutscher Kolben" geführt werden. In Anlehnung auf den für Deutschland typischen Filterkaffee wird bewusst auf eine Crema verzichtet, sodass der Kolbenkaffee filterkaffeeähnliche Eigenschaften erhält. Wenn beide Brühausgänge des Stempels 10 mit einem 2/2-Wegeventil verbunden werden, ist die Möglichkeit zur Erzeugung einer produktspezifischen Crema gegeben. Es besteht die Möglichkeit Produkte zu definieren, die entweder mit oder ohne Crema ausgegeben werden.

Anstelle der beiden Grundplatten 5, 6 könnte auch ein Rahmen verwendet werden.

Für den Auswurf des Kaffeesatzes ist es denkbar, dass eine Art Schieber mit Bürste und Wasserbrause zum Einsatz kommen kann.

Es ist auch denkbar, dass der Mitnehmer 37 auch an der Innenspindel 7 oder an einem anderen als der Sicherungsstange 7f mit der Innenspindel 7 verbundenen Bauteil verschiebbar angebracht ist.

### Bezugszeichen

- 1: Brüheinheit
- 2: Brühschlitten
- 2a: Brühschlittenachse
- 2b: Gehäuse
- 2c: Führungslager
- 2d: Antriebsabschnitt
- 2e: Einfüllöffnung
- 3: Außenspindel
- 3a: Außenspindelachse
- 3b: Antriebsende
- 3c: Lagerende
- 3d: Abtriebsabschnitt
- 3e: Bewegungsgewinde
- 3e-1, 3e-2: Gewindeauslauf
- 4: Führungsstange
- 4a: Führungsachse
- 4b, 4c: Stangenende
- 5, 6: Grundplatte
- 5a: Halteplatte
- 5b, 5c, 6a: Lager
- 7: Innenspindel
- 7a: Innenspindelachse
- 7b: Bewegungsgewinde
- 7b-1: Gewindeauslauf
- 7c, 7d: Spindelende
- 7e: Spindelabschnitt
- 7f: Sicherungsstange
- 7g: Stangenachse
- 7h, 7i: Stangenende
- 8: Sicherungslasche
- 9: Douchette
- 10: Stempel
- 11: Stempelhalter
- 11a, 11b: Stempelende
- 12: Brühzylinder
- 12a: Innenraum
- 12b: Brühraum
- 13, 14: Stirnseite
- 15: Außenspindelmutter
- 16, 17: Anschlagabschnitt
- 18, 19: Anschlageinheit
- 18a, 19a: Anschlagelement
- 18b, 19b: Druckfeder
- 18c, 19c: Scheibe
- 20: Antriebsmotor
- 20a: Motorachse
- 20b: Motorabtrieb
- 21, 22: Getriebe
- 23, 26: Antriebsrad
- 24, 27: Abtriebsrad
- 27a: Innenspindelmutter
- 25, 28: Zugmittel
- 29, 29a; 30, 30a: Schlauch
- 29b: Anschluss
- 31, 32: Schalenelement
- 33: Siebelement
- 34: Dichtung
- 34a: Dichtungsanschluss
- 35, 35a, 35b: Anschluss
- 36: Ventil
- 37: Mitnehmer
- 37a: Halteabschnitt
- 37b: Führungsabschnitt
- 37c: Verbindung
- 37d: Taschenachse
- 37e: Tasche
- 38: Aufnahme
- 38a: Aufnahmeachse

- BR, BR1, BR2: Bewegungsrichtung

## Patentansprüche

1. Brüheinheit (1) einer Kolbenkaffeemaschine, wobei die Brüheinheit (1) als eine Spindelbrüheinheit mit einem Brühschlitten (2) als Brühkammer, zwei Kolbeneinheiten als Douchette (9) und Stempel (10), einem Antriebsmotor (20) und mindestens einem Getriebe (21, 22) ausgebildet ist, wobei die Brüheinheit (1) eine Doppelspindelanordnung mit einer Außenspindel (3) und einer Innenspindel (7) aufweist,
wobei der Brühschlitten (2) aus einer ersten Endstellung in eine Zwischenstellung, dann in eine zweite Endstellung und wieder zurück in die erste Endstellung verstellbar ist,
wobei die Außenspindel (3) ein Bewegungsgewinde (3e) aufweist, welches mit einer in dem Brühschlitten (2) axial festgelegten Außenspindelmutter (15) in Eingriff steht,
**dadurch gekennzeichnet, dass**
das Bewegungsgewinde (3e) der Außenspindel (3) in der ersten Endstellung und in der zweiten Endstellung des Brühschlittens (2) außer Eingriff mit der Außenspindelmutter (15) ist und eine Geschwindigkeit des Brühschlittens (2) null beträgt, auch wenn sich die Außenspindel (3) weiter dreht.

2. Brüheinheit (1) nach Anspruch 1, **dadurch gekennzeichnet, dass** die Außenspindel (3) mit dem verstellbaren Brühschlitten (2) verbunden ist, die Innenspindel (7) mit der verstellbaren Douchette (9) oder dem verstellbaren Stempel (10) verbunden ist, und der Stempel (10) oder die Douchette (9) ortsfest angeordnet ist, wobei der verstellbare Brühschlitten (2) mittels der Außenspindel (3) und einer Führungsstange (4) längsverschiebbar geführt ist, und dass die Douchette (9) oder der Stempel (10) innerhalb des Brühschlittens (2) längsverschiebbar geführt ist, wobei der Brühschlitten (2) und die Douchette (9) oder der Stempel (10) mit unterschiedlichen Geschwindigkeiten in gemeinsamen Bewegungsrichtungen (BR1, BR2) verstellbar sind.

3. Brüheinheit (1) nach einem der vorhergehenden Ansprüche, **dadurch gekennzeichnet, dass** die Außenspindel (3) von dem Antriebsmotor (20) angetrieben ist und mit der Innenspindel (7) über das mindestens eine Getriebe (22) gekoppelt ist.

4. Brüheinheit (1) nach einem der vorhergehenden Ansprüche, **dadurch gekennzeichnet, dass** die Brüheinheit (1) mindestens einen schaltbaren Elektromagneten aufweist, welcher den Brühschlitten (2) in der jeweiligen Endstellung direkt oder indirekt über eine mechanische Verriegelung wieder lösbar fixiert.

5. Brüheinheit (1) nach einem der vorhergehenden Ansprüche, **dadurch gekennzeichnet, dass** die Brüheinheit (1) mindestens eine Wiedereinspindelungseinrichtung aufweist, welche einen erneuten Eingriff von Außenspindelmutter (15) und Bewegungsgewinde (3e) in der ersten Endstellung oder der zweiten Endstellung bewirkt.

6. Brüheinheit (1) nach Anspruch 5, **dadurch gekennzeichnet, dass** die mindestens eine Wiedereinspindelungseinrichtung mindestens eine Anschlageinheit (18, 19) mit einer jeweiligen Druckfeder (18b, 19b) aufweist, wobei der Brühschlitten (2) in der ersten Endstellung die Druckfeder (18b) einer ersten Anschlageinheit (18) vorspannt, und wobei der Brühschlitten (2) in der zweiten Endstellung die Druckfeder (19b) einer zweiten Anschlageinheit (19) vorspannt.

7. Brüheinheit (1) nach Anspruch 6, **dadurch gekennzeichnet, dass** die Druckfeder (18b) der ersten Anschlageinheit (18) das Bewegungsgewinde (3e) der Außenspindel (3) mit der Außenspindelmutter (15) des Brühschlittens (2) wieder in Eingriff bringt, wenn der Brühschlitten (2) mittels der Außenspindel (3) aus der ersten Endstellung verstellt wird, und dass die Druckfeder (19b) der zweiten Anschlageinheit (19) das Bewegungsgewinde (3e) der Außenspindel (3) mit der Außenspindelmutter (15) des Brühschlittens (2) wieder in Eingriff bringt, wenn der Brühschlitten (2) mittels der Außenspindel (3) aus der zweiten Endstellung verstellt wird.

8. Brüheinheit (1) nach einem der Ansprüche 5 bis 7, **dadurch gekennzeichnet, dass** die mindestens eine Wiedereinspindelungseinrichtung mindestens einen schaltbaren Elektromagneten aufweist, welcher auf den Brühschlitten (2) in der jeweiligen Endstellung direkt oder indirekt über eine mechanische Vorrichtung einen Bewegungsimpuls ausübt, welcher einen erneuten Eingriff von Außenspindelmutter (15) und Bewegungsgewinde (3e) in der ersten Endstellung oder der zweiten Endstellung bewirkt.

9. Brüheinheit (1) nach einem der Ansprüche 5 bis 8, **dadurch gekennzeichnet, dass** die mindestens eine Wiedereinspindelungseinrichtung mindestens zwei schaltbare und umpolbare Elektromagneten aufweist, von denen einer ortsfest und der andere an dem Brühschlitten (2) angebracht ist.

10. Brüheinheit (1) nach einem der Ansprüche 5 bis 9, **dadurch gekennzeichnet, dass** die mindestens eine Wiedereinspindelungseinrichtung mindestens ein Reibungselement direkt an der beweglichen Innenspindel (7) oder indirekt an einem an der Innenspindel (7) angebrachten Bauteil in Zusammenwirkung mit dem Brühschlitten (2) aufweist.

11. Brüheinheit (1) nach einem der Ansprüche 5 bis 10, **dadurch gekennzeichnet, dass** die mindestens eine Wiedereinspindelungseinrichtung mindestens ein Reibungselement aufweist, welches als ein hydraulisches Dichtelement ausgebildet ist wobei das mindestens eine hydraulische Dichtelement eine an der Douchette (9) oder an dem Stempel (10) angebrachte Dichtung (34) ist, welche durch Beaufschlagung mit einem Druck gesteuert ist..

12. Brüheinheit (1) nach einem der Ansprüche 5 bis 11, **dadurch gekennzeichnet, dass** die mindestens eine Wiedereinspindelungseinrichtung eine Mitnehmereinrichtung mit mindestens einem Mitnehmer (37) aufweist, welcher einerseits an der Innenspindel (7) oder einem mit der Innenspindel (7) verbundenen Bauteil und andererseits an der Führungsstange (4) verschiebbar geführt ist, wobei der Mitnehmer (37) in einer Ruheposition in Bezug auf die Innenspindel (7) oder das mit der Innenspindel (7) verbundene Bauteil mit einer bestimmten Haltekraft gehalten ist, die in der Ruheposition größer ist als außerhalb der Ruheposition.

13. Brüheinheit (1) nach Anspruch 12, **dadurch gekennzeichnet, dass** der mindestens eine Mitnehmer (37) ein erstes Halteelement aufweist, und dass ein zweites Halteelement an oder in der Innenspindel (7) oder an oder in dem mit der Innenspindel (7) verbundenen Bauteil angebracht ist, wobei das erste Halteelement und das zweite Halteelement in der Ruheposition des Mitnehmers (37) die bestimmte Haltekraft erzeugen.

14. Brüheinheit (1) nach Anspruch 13, **dadurch gekennzeichnet, dass** das erste Halteelement ein Permanentmagnet ist oder ein mit Federkraft beaufschlagtes Kugeldruckelement ist, welches in der Ruheposition des Mitnehmers (37) mit einer korrespondierenden Einformung oder Nut in der Innenspindel (7) oder in dem mit der Innenspindel (7) verbundenen Bauteil in Kontakt steht, und dass das zweite Halteelement ein Permanentmagnet ist.

15. Brüheinheit (1) nach einem der vorhergehenden Ansprüche, **dadurch gekennzeichnet, dass** die Innenspindel (7) ein Bewegungsgewinde (7b) aufweist, welches mit einer ortsfest drehbar gelagerten Innenspindelmutter (27a) in Eingriff steht.

16. Brüheinheit (1) nach einem der vorhergehenden Ansprüche, **dadurch gekennzeichnet, dass** die Innenspindelmutter (27a) ein Bestandteil eines Abtriebsrades (27) des mindestens einen Getriebes (22) ist.

17. Brüheinheit (1) nach Anspruch 15, **dadurch gekennzeichnet, dass** die Innenspindel (7) mit einer Sicherungsstange (7f) als Verdrehsicherung in Verbindung steht.

18. Kolbenkaffeemaschine mit einer Brüheinheit (1) nach einem der vorhergehenden Ansprüche.

## Claims

1. Brewing unit (1) of a piston coffee machine, wherein the brewing unit (1) is designed as a spindle brewing unit having a brewing slide (2) as brewing chamber, two piston units as shower screen (9) and plunger (10), a drive motor (20) and at least one gearing mechanism (21, 22), wherein the brewing unit (1) comprises a double-spindle assembly having an outer spindle (3) and an inner spindle (7), wherein the brewing slide (2) can be moved from a first end position into an intermediate position, then into a second end position and back again into the first end position,
wherein the outer spindle (3) has a movement thread (3e) which engages with an outer spindle nut (15) axially fixed in the brewing slide (2),
**characterized in that**
the movement thread (3e) of the outer spindle (3) is disengaged from the outer spindle nut (15) in the first end position and in the second end position of the brewing slide (2) and a speed of the brewing slide (2) is zero even if the outer spindle (3) continues to rotate.

2. Brewing unit (1) according to claim 1, **characterized in that** the outer spindle (3) is connected to the adjustable brewing slide (2), the inner spindle (7) is connected to the adjustable shower screen (9) or the adjustable plunger (10), and the plunger (10) or the shower screen (9) is arranged in a fixed position, wherein the adjustable brewing slide (2) is guided in a longitudinally displaceable manner by means of the outer spindle (3) and a guide rod (4), and **in that** the shower screen (9) or the plunger (10) is guided in a longitudinally displaceable manner inside the brewing slide (2), wherein the brewing slide (2) and the shower screen (9) or the plunger (10) are adjustable at different speeds in common directions of movement (BR1, BR2).

3. Brewing unit (1) according to one of the preceding claims, **characterized in that said** outer spindle (3) is driven by the drive motor (20) and is coupled to the inner spindle (7) via the at least one gearing mechanism (22).

4. Brewing unit (1) according to one of the preceding claims, **characterized in that** the brewing unit (1) has at least one switchable electromagnet which fixes the brewing slide (2) in the respective end position in a releasable manner again directly or indirectly via a mechanical locking device.

5. Brewing unit (1) according to one of the preceding claims, **characterized in that** the brewing unit (1) comprises at least one spindle re-engagement device which causes re-engagement of the outer spindle nut (15) and the movement thread (3e) in the first end position or the second end position.

6. Brewing unit (1) according to claim 5, **characterized in that** the at least one spindle re-engagement device comprises at least one stop unit (18, 19) with a respective compression spring (18b, 19b), wherein the brewing slide (2) pretensions the compression spring (18b) of a first stop unit (18) in the first end position, and wherein the brewing slide (2) pretensions the compression spring (19b) of a second stop unit (19) in the second end position.

7. Brewing unit (1) according to claim 6, **characterized in that** the compression spring (18b) of the first stop unit (18) re-engages the movement thread (3e) of the outer spindle (3) with the outer spindle nut (15) of the brewing slide (2) when the brewing slide (2) is displaced from the first end position by means of the outer spindle (3), and **in that** the compression spring (19b) of the second stop unit (19) re-engages the movement thread (3e) of the outer spindle (3) with the outer spindle nut (15) of the brewing slide (2) when the brewing slide (2) is moved from the second end position by means of the outer spindle (3).

8. Brewing unit (1) according to one of claims 5 to 7, **characterized in that** the at least one spindle re-engagement device comprises at least one switchable electromagnet which exerts a movement impulse on the brewing slide (2) in the respective end position, directly or indirectly via a mechanical device, which movement impulse causes renewed engagement of the outer spindle nut (15) and movement thread (3e) in the first end position or the second end position.

9. Brewing unit (1) according to one of claims 5 to 8, **characterized in that** the at least one spindle re-engagement device comprises at least two switchable and reversible electromagnets, one of which is fixed and the other of which is attached to the brewing slide (2).

10. Brewing unit (1) according to one of claims 5 to 9, **characterized in that** the at least one spindle re-engagement device comprises at least one friction element directly on the movable inner spindle (7) or indirectly on a component mounted on the inner spindle (7) in cooperation with the brewing slide (2).

11. Brewing unit (1) according to one of claims 5 to 10, **characterized in that** the at least one spindle re-engagement device comprises at least one friction element configured as a hydraulic sealing element, wherein the at least one hydraulic sealing element is a seal (34) attached to the shower screen (9) or to the plunger (10), which seal (34) is controlled by the application of a pressure.

12. Brewing unit (1) according to one of claims 5 to 11, **characterized in that** the at least one spindle re-engagement device comprises a driver device having at least one driver (37), which is displaceably guided on the one hand on the inner spindle (7) or a component connected to the inner spindle (7) and on the other hand on the guide rod (4), wherein the driver (37) is held in a rest position with respect to the inner spindle (7) or the component connected to the inner spindle (7) with a certain retaining force which is greater in the rest position than outside the rest position.

13. Brewing unit (1) according to claim 12, **characterized in that** the at least one driver (37) comprises a first retaining element, and **in that** a second retaining element is mounted on or in the inner spindle (7) or on or in the component connected to the inner spindle (7), wherein the first retaining element and the second retaining element generate the determined retaining force in the rest position of the driver (37).

14. Brewing unit (1) according to claim 13, **characterized in that** the first retaining element is a permanent magnet or is a spring-loaded ball pressure element which, in the rest position of the driver (37), is in contact with a corresponding indentation or groove in the inner spindle (7) or in the component connected to the inner spindle (7), and **in that** the second retaining element is a permanent magnet.

15. Brewing unit (1) according to one of the preceding claims, **characterized in that** the inner spindle (7) comprises a movement thread (7b) which is in engagement with a fixedly rotatably mounted inner spindle nut (27a).

16. Brewing unit (1) according to one of the preceding claims, **characterized in that** the inner spindle nut (27a) is a component of an output gear (27) of the at least one gearing mechanism (22).

17. Brewing unit (1) according to claim 15, **characterized in that** the inner spindle (7) is connected to a securing rod (7f) as an anti-rotation device.

18. Piston coffee machine comprising a brewing unit (1) according to one of the preceding claims.

## Revendications

1. Unité de percolation (1) pour une cafetière à piston, laquelle unité de percolation (1) est conformée comme une unité de percolation à broche avec un chariot de percolation (2) servant de chambre de percolation, deux unités de piston formant une douchette (9) et un vérin (10), un moteur d'entraînement (20) et au moins un engrenage (21, 22), laquelle unité de percolation (1) présente un dispositif à double broche avec une broche extérieure (3) et une broche intérieure (7),
dans laquelle le chariot de percolation (2) peut être déplacé d'une première position de fin de course à une position intermédiaire, puis à une deuxième position de fin de course et retour à la première position de fin de course,
dans laquelle la broche extérieure (3) présente un filetage d'avance (3e) qui est en prise avec un écrou de broche extérieure (15) fixé dans le sens axial dans le chariot de percolation (2),
**caractérisée en ce que** le filetage d'avance (3e) de la broche extérieure (3) n'est pas en prise avec l'écrou de broche extérieure (15) dans la première position de fin de course ni dans la deuxième position de fin de course du chariot de percolation (2) et la vitesse du chariot de percolation (2) est nulle même quand la broche extérieure (3) continue à tourner.

2. Unité de percolation (1) selon la revendication 1, **caractérisée en ce que** la broche extérieure (3) est reliée au chariot de percolation (2) déplaçable, la broche intérieure (7) est reliée à la douchette (9) déplaçable ou au vérin (10) déplaçable et le vérin (10) ou la douchette (9) est disposé de façon stationnaire, le chariot de percolation (2) déplaçable étant guidé en translation longitudinale au moyen de la broche extérieure (3) et d'une tige de guidage (4), et **en ce que** la douchette (9) ou le vérin (10) est guidé en translation longitudinale à l'intérieur du chariot de percolation (2), le chariot de percolation (2) et la douchette (9) ou le vérin (10) étant déplaçable à des vitesses différentes dans les mêmes sens de déplacement (BR1, BR2).

3. Unité de percolation (1) selon l'une des revendications précédentes, **caractérisé en ce que** la broche extérieure (3) est entraînée par le moteur d'entraînement (20) et couplée avec la broche intérieure (7) par l'au moins un engrenage (22).

4. Unité de percolation (1) selon l'une des revendications précédentes, **caractérisé en ce que** l'unité de percolation (1) présente au moins un électroaimant commutable, qui fixe le chariot de percolation (2) dans chaque position de fin de course d'une façon pouvant être défaite, directement ou indirectement par un verrouillage mécanique.

5. Unité de percolation (1) selon l'une des revendications précédentes, **caractérisée en ce que** l'unité de percolation (1) présente au moins un dispositif de remontage sur broche qui remet l'écrou de broche extérieure (15) en prise avec le filetage d'avance (3e) dans la première position de fin de course ou la deuxième position de fin de course.

6. Unité de percolation (1) selon la revendication 5, **caractérisée en ce que** l'au moins un dispositif de remontage sur broche présente au moins une unité de butée (18, 19) avec un ressort de compression (18b, 19b), le chariot de percolation (2) précontraignant le ressort de compression (18b) d'une première unité de butée (18) dans la première position de fin de course et le chariot de percolation (2) précontraignant le ressort de compression (19b) d'une deuxième unité de butée (19) dans la deuxième position de fin de course.

7. Unité de percolation (1) selon la revendication 6, **caractérisée en ce que** le ressort de compression (18b) de la première unité de butée (18) remet le filetage d'avance (3e) de la broche extérieure (3) en prise avec l'écrou de broche extérieure (15) du chariot de percolation (2) quand le chariot de percolation (2) est déplacé au moyen de la broche extérieure (3) à partir de la première position de fin de course, et **en ce que** le ressort de compression (19b) de la deuxième unité de butée (19) remet le filetage d'avance (3e) de la broche extérieure (3) en prise avec l'écrou de broche extérieure (15) du chariot de percolation (2) quand le chariot de percolation (2) est déplacé au moyen de la broche extérieure (3) à partir de la deuxième position de fin de course.

8. Unité de percolation (1) selon l'une des revendications 5 à 7, **caractérisée en ce que** l'au moins un dispositif de remontage sur broche présente au moins un électroaimant commutable qui exerce une impulsion d'entraînement sur le chariot de percolation (2) dans chaque position de fin de course, directement ou indirectement par l'intermédiaire d'un dispositif mécanique, et remet ainsi l'écrou de broche extérieure (15) en prise avec le filetage d'avance (3e) dans la première position de fin de course ou la deuxième position de fin de course.

9. Unité de percolation (1) selon l'une des revendications 5 à 8, **caractérisée en ce que** l'au moins un dispositif de remontage sur broche présente au moins deux électroaimants commutables et dont la polarité peut être inversée, dont l'un est disposé de façon stationnaire et l'autre est disposé sur le chariot de percolation (2).

10. Unité de percolation (1) selon l'une des revendications 5 à 9, **caractérisée en ce que** l'au moins un dispositif de remontage sur broche comporte au moins un élément de friction directement sur la broche intérieure (7) mobile ou indirectement sur une pièce disposée sur la broche intérieure (7), coopérant avec le chariot de percolation (2).

11. Unité de percolation (1) selon l'une des revendications 5 à 10, **caractérisée en ce que** l'au moins un dispositif de remontage sur broche présente au moins un élément de friction qui est conçu comme un élément d'étanchéité hydraulique, l'au moins un élément d'étanchéité hydraulique étant un joint (34) disposé sur la douchette (9) ou sur le vérin (10), qui est contrôlé par l'exposition à une pression.

12. Unité de percolation (1) selon l'une des revendications 5 à 11, **caractérisée en ce que** l'au moins un dispositif de remontage sur broche présente un dispositif d'entraînement avec au moins un entraîneur (37), qui est guidé en translation, d'une part, sur la broche intérieure (7) ou une pièce reliée à la broche intérieure (7) et, d'autre part, sur la tige de guidage (4), l'entraîneur (37) étant retenu dans une position de repos par rapport à la broche intérieure (7) ou à la pièce reliée à la broche intérieure (7) avec une certaine force de maintien, qui est plus grande dans la position de repos qu'en dehors de la position de repos.

13. Unité de percolation (1) selon la revendication 12, **caractérisée en ce que** l'au moins un entraîneur (37) présente un premier élément de maintien et **en ce qu'**un deuxième élément de maintien est posé sur ou dans la broche intérieure (7) ou sur ou dans la pièce reliée à la broche intérieure (7), le premier élément de maintien et le deuxième élément de maintien produisant la force de maintien déterminée dans la position de repos de l'entraîneur (37).

14. Unité de percolation (1) selon la revendication 13, **caractérisée en ce que** le premier élément de maintien est un aimant permanent ou un élément de pression à bille soumis à la force d'un ressort, qui est en contact, dans la position de repos de l'entraîneur (37), avec un creux de forme correspondante ou une gorge dans la broche intérieure (7) ou dans la pièce reliée à la broche intérieure (7), et **en ce que** le deuxième élément de maintien est un aimant permanent.

15. Unité de percolation (1) selon l'une des revendications précédentes, **caractérisée en ce que** la broche intérieure (7) présente une filetage d'avance (7b) qui est en prise avec un écrou de broche intérieure (27a) stationnaire supporté avec possibilité de rotation.

16. Unité de percolation (1) selon l'une des revendications précédentes, **caractérisée en ce que** l'écrou de broche intérieure (27a) fait partie d'une roue menée (27) de l'au moins un engrenage (22).

17. Unité de percolation (1) selon la revendication 15, **caractérisée en ce que** la broche intérieure (7) est reliée à une tige de sureté (7f) antirotation.

18. Machine à café à piston avec une unité de percolation (1) selon l'une des revendications précédentes.
